# EUROPEAN PATENT APPLICATION

(11) **EP 4 819 100 A1**
(43) Date of publication of application: **07.10.2026**
(21) Application number: 26162130.4
(22) Date of filing: 03.03.2026
(51) Int. Cl.: G08G 1/16, G06N 3/02, G06N 3/08, G08G 1/0967, H04W 4/40, H04W 4/46

(54) **DYNAMIC KNOWLEDGE DISTRIBUTION NETWORK GENERATION**

(30) Priority: 31.03.2025 US 202519095090
(71) Applicant: TOYOTA MOTOR ENGINEERING & MANUFACTURING NORTH AMERICA, INC., Plano, TX 75024 (US)
(72) Inventor: UCAR, Seyhan, PLANO, TEXAS, 75024 (US); KHAN, Mohammad Irfan, PLANO, TEXAS, 75024 (US); ALTINTAS, Onur, TOYOTA-SHI, AICHI-KEN, 471 8571 (JP)
(74) Representative: Cabinet Beau de Loménie

(57) **Abstract**

An example operation includes one or more of capturing sensor data with at least one sensor of a vehicle (110), identifying contextual attributes of an environment of the vehicle based on the sensor data and properties of the environment, determining an event that is going to occur in the environment at a future point in time based on the contextual attributes, dynamically generating a distribution network based on based on execution of an AI model (122) the contextual attributes, and distributing a notification of the event to the generated distribution network.

## Description

### Background

Vehicles or transports, such as cars, motorcycles, trucks, planes, trains, etc., generally provide transportation to occupants and/or goods in a variety of ways. Functions related to vehicles may be identified and utilized by various computing devices, such as a smartphone or a computer located on and/or off the vehicle.

### Summary

The instant solution provides a method that includes one or more of capturing sensor data with at least one sensor of a vehicle, identifying contextual attributes of an environment of the vehicle based on the sensor data and properties of the environment, determining an event that is going to occur in the environment at a future point in time based on the contextual attributes, dynamically generating a distribution network based on based on execution of an artificial intelligence (AI) model the contextual attributes, and distributing a notification of the event to the generated distribution network.

The instant solution also provides a system that includes a memory communicatively coupled to a processor, wherein the processor is configured to perform one or more of capture sensor data with at least one sensor of a vehicle, identify contextual attributes of an environment of the vehicle based on the sensor data and properties of the environment, determine an event that is going to occur in the environment at a future point in time based on the contextual attributes, dynamically generate a distribution network based on based on execution of an AI model the contextual attributes, and distribute a notification of the event to the generated distribution network.

The instant solution further provides a computer-readable storage medium comprising instructions, that when read by a processor, cause the processor to perform one or more of capturing sensor data with at least one sensor of a vehicle, identifying contextual attributes of an environment of the vehicle based on the sensor data and properties of the environment, determining an event that is going to occur in the environment at a future point in time based on the contextual attributes, dynamically generating a distribution network based on based on execution of an AI model the contextual attributes, and distributing a notification of the event to the generated distribution network.

### Brief Description of the Drawings

FIG. 1A is a diagram illustrating a system for dynamic distribution network generation according to an example of the instant solution.
FIG. 1B is a diagram illustrating a process of detecting an event within a vehicle environment according to an example of the instant solution.
FIG. 1C is a diagram illustrating a process of dynamically generating the distribution network according to an example of the instant solution.
FIG. 1D is a diagram illustrating a communication sequence for notifying a distribution network of a detected event or knowledge according to an example of the instant solution.
FIG. 1E is a diagram illustrating a process of training an artificial intelligence (AI) model according to an example of the instant solution.
FIG. 2A illustrates a vehicle network diagram, according to an example of the instant solution.
FIG. 2B illustrates another vehicle network diagram, according to an example of the instant solution.
FIG. 2C illustrates yet another vehicle network diagram, according to an example of the instant solution.
FIG. 2D illustrates a further vehicle network diagram, according to an example of the instant solution.
FIG. 2E illustrates a flow diagram, according to an example of the instant solution.
FIG. 2F illustrates another flow diagram, according to an example of the instant solution.
FIG. 3A illustrates an Artificial Intelligence (AI) network diagram.
FIG. 3B illustrates an Artificial Intelligence (AI) / Machine Learning (ML) network diagram for integrating an artificial intelligence (AI) model into any decision point in an example of the instant solution.
FIG. 3C illustrates a process for developing an Artificial Intelligence (AI) / Machine Learning (ML) model that supports AI-assisted vehicle or occupant decision points.
FIG. 3D illustrates a process for utilizing an Artificial Intelligence (AI) / Machine Learning (ML) model that supports AI-assisted vehicle or occupant decision points.
FIG. 3E illustrates a network diagram supporting AI-assisted vehicle or occupant services, according to an example of the instant solution.
FIG. 3F illustrates another network diagram supporting AI-assisted vehicle or occupant services, according to an example of the instant solution.
FIG. 3G illustrates a machine learning network diagram, according to an example of the instant solution.
FIG. 3H illustrates a machine learning network diagram, according to an example of the instant solution.
FIG. 4A illustrates a diagram depicting electrification of one or more elements, according to an example of the instant solution.
FIG. 4B illustrates a diagram depicting interconnections between different elements, according to an example of the instant solution.
FIG. 4C illustrates a further diagram depicting interconnections between different elements, according to an example of the instant solution.
FIG. 4D illustrates yet a further diagram depicting interconnections between elements, according to an example of the instant solution.
FIG. 4E illustrates yet a further diagram depicting an example of vehicles performing secured Vehicle-to-Vehicle (V2V) communications using security certificates, according to an example of the instant solution.
FIG. 5A illustrates an example vehicle configuration for managing database transactions associated with a vehicle, according to an example of the instant solution.
FIG. 5B illustrates an example vehicle group, according to an example of the instant solution.
FIG. 5C illustrates an example interaction between elements and a database, according to an example of the instant solution.
FIG. 6 illustrates an example system that supports one or more of an example of the instant solution.

### Detailed Description

It will be readily understood that the instant components, as generally described and illustrated in the figures herein, may be arranged and designed in a wide variety of different configurations. Thus, the following detailed description of the instant solution of at least one of a method, apparatus, computer-readable storage medium system, and other element, structure, component, or device as represented in the attached figures, is not intended to limit the scope of the application as claimed but is merely representative of aspects of the instant solution. Any of the components described or depicted herein that perform a same or similar functionality may be a same or similar component. For example, different AI-related components that are described or depicted may be the same AI component.

Communications between the vehicle(s) and certain entities, such as remote servers, other vehicles, and local computing devices (e.g., smartphones, personal computers, vehicle-embedded computers, etc.) may be sent and/or received and processed by one or more 'components' which may be hardware, firmware, software, or a combination thereof. The components may be part of any of these entities or computing devices or certain other computing devices. In one example, consensus decisions related to blockchain transactions may be performed by one or more computing devices or components (which may be any element described and/or depicted herein) associated with the vehicle(s) and one or more of the components outside or at a remote location from the vehicle(s).

The instant features, structures, or characteristics described in this specification may be combined in any suitable manner in the instant solution. Thus, the one or more features, structures, or characteristics of the instant solution, described or depicted in this specification, are utilized in various manners. Thus, the one or more features, structures, or characteristics of the instant solution may work in conjunction with one another, may not be functionally separate, and these features, structures, or characteristics may be combined in any suitable manner. Although presented in a particular manner, by example only, one or more feature(s), element(s), and step(s) described or depicted herein may be utilized together and in various combinations, without exclusivity, unless expressly indicated otherwise herein. In the figures, any connection between elements (for example, a line or an arrow) can permit one-way and/or two-way communication, even if the depicted connection shown is a one-way or two-way connection.

In the instant solution, a vehicle may include one or more of cars, trucks, Internal Combustion Engine (ICE) vehicles, electric vehicles, such as battery electric vehicles (BEVs), hybrid electric vehicles (HEVs), plug-in electric vehicles (PHEVs), and any other type of electric vehicles, fuel cell vehicles, any vehicle utilizing renewable sources, other hybrid vehicles, such as parallel hybrid vehicles, series hybrid vehicles, and mild hybrid vehicles, e-Palettes, buses, motorcycles, scooters, bicycles, boats, recreational vehicles, planes, drones, Unmanned Aerial Vehicles and any object that may be used to transport people and/or goods from one location to another.

In addition, while the term "message" may have been used in the description of method, apparatus, computer-readable storage medium system, and other element, structure, component, or device, other types of network data, such as, a packet, frame, datagram, etc. may also be used. Furthermore, while certain types of messages and signaling may be depicted in exemplary configurations they are not limited to a certain type of message and signaling.

Example configurations of the instant solution provide methods, systems, components, non-transitory computer-readable storage mediums, devices, and/or networks, which provide at least one of a transport (also referred to as a vehicle or car herein), a data collection system, a data monitoring system, a verification system, an authorization system, and a vehicle data distribution system. The vehicle status condition data received in the form of communication messages, such as wireless data network communications and/or wired communication messages, may be processed to identify vehicle status conditions and provide feedback on the condition and/or changes of a vehicle. In one example, a user profile may be applied to a particular vehicle to authorize a current vehicle event, service stops at service stations, to authorize subsequent vehicle rental services, and enable vehicle-to-vehicle communications.

An instant method, apparatus, computer-readable storage medium system, and other element, structure, component, or device provides a service to a particular vehicle and/or a user profile that is applied to the vehicle. For example, a user may be the owner of a vehicle or the operator of a vehicle owned by another party. The vehicle may require service at certain intervals, and the service needs may require authorization before permitting the services to be received. Also, service centers may offer services to vehicles in a nearby area based on the vehicle's current route plan and a relative level of service requirements (e.g., immediate, severe, intermediate, minor, etc.). The vehicle needs may be monitored via one or more vehicles and/or road sensors or cameras, which report sensed data to a central controller computer device in and/or apart from the vehicle. This data is forwarded to a management server for review and action. A sensor may be located on one or more of the interior of the vehicle, the exterior of the vehicle, on a fixed object apart from the vehicle, and/or on another vehicle proximate the vehicle. The sensor may also be associated with the vehicle's speed, the vehicle's braking, the vehicle's acceleration, fuel levels, service needs, the gear-shifting of the vehicle, the vehicle's steering, and the like. A sensor, as described herein, may also be a device, such as a wireless device in and/or proximate to the vehicle. Also, sensor information may be used to identify whether the vehicle is operating safely and whether an occupant has engaged in any unexpected vehicle conditions, such as during a vehicle access and/or utilization period. Vehicle information collected before, during and/or after a vehicle's operation may be identified and stored in a transaction on a shared/distributed ledger, which may be generated and committed to the immutable ledger as determined by a permission granting consortium, and thus in a "decentralized" manner, such as via a blockchain membership group.

Each interested party (*i.e.*, owner, user, company, agency, etc.) may want to limit the exposure of private information, and therefore the blockchain and its immutability can be used to manage permissions for each user vehicle profile. A smart contract may be used to provide compensation, quantify a user profile score/rating/review, apply vehicle event permissions, determine when service is needed, identify a collision and/or degradation event, identify a safety concern event, identify parties to the event and provide distribution to registered entities seeking access to such vehicle event data. Also, the results may be identified, and the necessary information can be shared among the registered companies and/or individuals based on a consensus approach associated with the blockchain. Such an approach may not be implemented on a traditional centralized database.

Various driving systems of the instant solution can utilize software, an array of sensors as well as machine learning functionality, light detection and ranging (LiDAR) projectors, radar, ultrasonic sensors, etc. to create a map of terrain and road that a vehicle can use for navigation and other purposes. In some examples of the instant solution, global positioning system (GPS), maps, cameras, sensors, and the like can also be used in autonomous vehicles in place of LiDAR.

The instant solution includes, in certain instant examples, authorizing a vehicle for service via an automated and quick authentication scheme. For example, driving up to a charging station or fuel pump may be performed by a vehicle operator or an autonomous vehicle and the authorization to receive charge or fuel may be performed without any delays provided the authorization is received by the service and/or charging station. A vehicle may provide a communication signal that provides an identification of a vehicle that has a currently active profile linked to an account that is authorized to accept a service, which can be later rectified by compensation. Additional measures may be used to provide further authentication, such as another identifier may be sent from the user's device wirelessly to the service center to replace or supplement the first authorization effort between the vehicle and the service center with an additional authorization effort.

Data shared and received may be stored in a database, which maintains data in one single database (e.g., database server) and generally at one particular location. This location is often a central computer, for example, a desktop central processing unit (CPU), a server CPU, or a mainframe computer. Information stored on a centralized database is typically accessible from multiple different points. A centralized database is easy to manage, maintain, and control, especially for purposes of security because of its single location. Within a centralized database, data redundancy is minimized as having a single storing place of all data and also implies that a given set of data only has one primary record. A decentralized database, such as a blockchain, may be used for storing vehicle-related data and transactions.

Any of the actions described herein may be performed by one or more processors (such as a microprocessor, a sensor, an Electronic Control Unit (ECU), a head unit, and the like), with or without memory, which may be located on-board the vehicle and/or off-board the vehicle (such as a server, computer, mobile/wireless device, etc.). The one or more processors may communicate with other memory and/or other processors on-board or off-board other vehicles to utilize data being sent by and/or to the vehicle. The one or more processors and the other processors can send data, receive data, and utilize this data to perform one or more of the actions described or depicted herein.

As a vehicle is maneuvering down a travel route, situations / anomalies can occur that indicate a need for the vehicle to communicate with other "connected" vehicles in the area. For example, sensor data from a vehicle may be processed by a ML / AI model to detect one of many possible useful insights, (such as dangerous or anomalous situations) that could present danger to other vehicles, people, and infrastructure in the area. For example, an ego vehicle may use the ML / AI model to detect the event/situation when another vehicle is driving erratically (e.g., weaving in and out, speeding, etc.) In response, the ego vehicle then determines a "distribution network" of other vehicles / infrastructure within the area that should be notified of the dangerous situation. Here, the ego vehicle may then notify other connected vehicles, infrastructure, sensors, streetlights, etc. in the area of the other vehicle that is driving erratically.

Due to the potential danger that these situations can create for the ego vehicle, the other vehicle, and any other remaining vehicles on the road, it is important for safety purposes that the notifications be generated and shared with the other vehicles in real-time or as near real-time as possible. However, traditionally, the determination of what vehicles and infrastructure should be included in the infrastructure is performed after the knowledge (e.g., be the driving type, the movement patterns, the repetition of the movement pattern, etc.) is generated by the ML / AI model. In other embodiments, the knowledge is generated by time-series analysis where one can analyze the movement in time-series, and infer the repeating movement pattern. In other words, the system typically needs the knowledge output by the ML / AI model before it can decide on what entities to include in the distribution network.

The system described herein can "pre-prepare" the distribution network prior to or without the knowledge being generated or output by the ML / AI model. In particular, the system can use contextual attributes of the situation including both static contextual attributes (e.g., road conditions, traffic rules, speed limits, etc.) and dynamically contextual attributes (e.g., weather conditions, vehicle type, driver type, objects in the area, whether ADAS is being used, etc.) The system can then "infer" the distribution knowledge based on the contextual attributes of the situation. This enables the vehicle to determine the "distribution network" much faster than related systems which wait to identify the distribution network until the knowledge is generated by the ML / AI model. Thus, a notification can be distributed quicker by the example embodiments, which can lead to increased safety warnings on the road.

Contextual features define the data, information used in knowledge creation. The vehicles, edge or cloud servers can run analysis and construct contextual features. The contextual feature includes but is not limited to followings. static properties including the location, road geometry, traffic rule while the knowledge is being created, dynamic properties including traffic flow, vehicle/driver type, congestion, type of objects at the location, application (e.g., ADAS) is being used, etc., and knowledge properties include size (volume) of the data, type of data (e.g., discrete or continuous), structure of data (e.g., semi-structured), processes or analyses applied to infer knowledge etc. The contextual features can be constructed by vehicles, edge or cloud

For example, a vehicle can sense the location, road geometry and measure the traffic congestion and risk levels in the vicinity. These are examples of contextual features and multiple vehicles in the same location/region can do contextual feature construction and the edge/cloud server can aggregate multiple features specific to location/region. The size of data/information is at the gigabyte level, and the data/information is continuous (e.g., time-series time-headway information).

Knowledge distribution networks could be formed according to predetermined criteria(s). These predefined criteria and the properties of knowledge distribution network could be represented as a look up table. Some common criteria(s) include but are not limited to criteria for minimizing delay and maximizing utilization (ensuring maximum benefits for users), necessitates the formation of knowledge distribution networks with edge servers centered at intersections. The look-up table can be constructed by performing time series analysis on previously formed knowledge distribution networks. The repeating pattern on contextual features can provide clues about common distribution parameters (e.g., how far, for how long, how often updated).

The knowledge distribution network could be recorded by including the contextual parameters in knowledge creation and the knowledge network parameters in knowledge distribution. A machine learning model can be trained with these parameters to predict the knowledge distribution network itself. For example, in the above example, the contextual features can be given as input and the knowledge network parameters can be predicted based on them using time series transformers. In the last step, the knowledge is distributed through formed knowledge networks. It also includes the guidance related to the knowledge. For example, in the above scenario, the weaving behavior detection model (knowledge) is distributed based on the trajectory of the subject vehicle (red vehicle). The network elements, including connected vehicles and edge servers, are given actions to frequently check and update the knowledge itself.

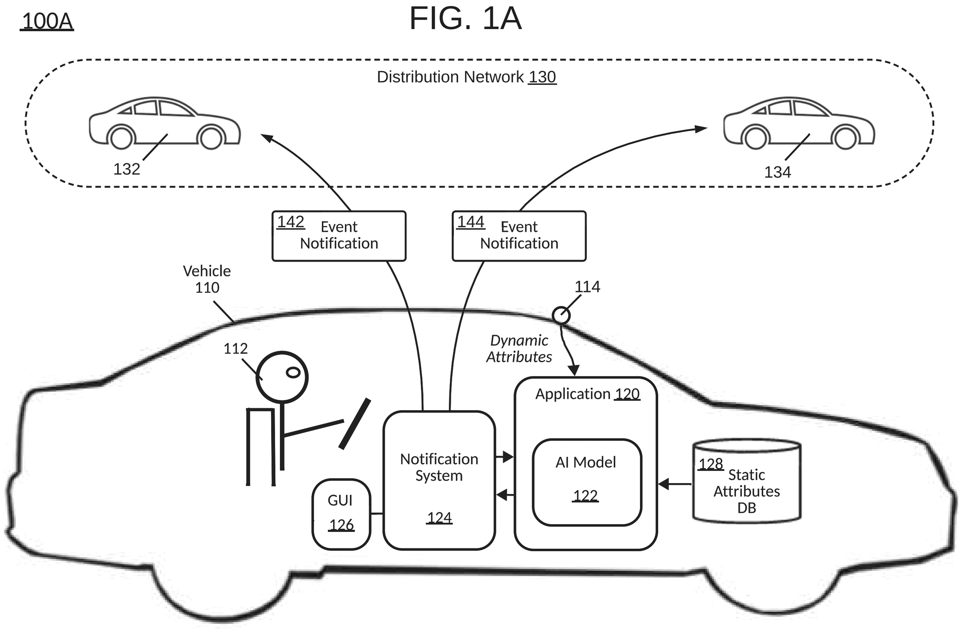

FIG. 1A illustrates a system 100A for dynamic distribution network generation according to an example of the instant solution. Referring to FIG. 1A, a vehicle 110, such as an ego vehicle, may travel down a road, route, street, highway, area, etc., and may detect an event that is likely to occur or that is already occurring. The event may refer to an action or anomaly, or knowledge related to an action or anomaly. For example, a situation could arise where there is no event, such as when a remote server accumulates data from multiple connected vehicles and in another timeframe, such data could be further analyzed to identify the useful knowledge. In some embodiments, the vehicle 110 may include an occupant 112 such as a driver. It should also be appreciated that the vehicle 110 may be an autonomous vehicle that can maneuver on its own. Anomalies may include dangerous driving behavior (e.g., swerving, hard braking, speeding, etc.) As another example, anomalies may include other situations such as when a vehicle is running off charge / gas. As another example, anomalies may include accidents, disabled vehicles, objects in the roadway, emergency services at a scene, and the like.

According to various embodiments, the vehicle 110 may include a software application 120 installed in a computer thereof which can detect anomalies on the road from contextual data such as static attributes and/or dynamic attributes of the environment where the vehicle is travelling. The software application 120 can also dynamically generate or otherwise determine the distribution network for notifying other vehicles of the anomalies. For example, the ego vehicle can inform the remote server with the knowledge of weaving driving and the remote server can do the rest. The software application 120 may use an AI model 122, or multiple AI models, to predict the distribution network including the participants, the frequency of data to be transmitted, a geographic size, and the like.

In the example of FIG. 1A, the software application 120 may receive dynamic data from a sensor 114 installed on the vehicle such as imaging data, radar, LiDAR, audio data, and the like. The sensor 114 may also capture information such as speed, location, time of day, other vehicle movements and behavior in the area, distances between the ego vehicle and the other vehicles in the area, and the like. The software application 120 may also ingest static attributes if the environment from a static attributes database 128 which may contain road geometries, traffic rules for a particular area, and the like. The software application 120 may input the contextual attributes into the AI model 122 to dynamically determine a distribution network 130 for knowledge distribution. The software application 120 may also detect the anomaly from the contextual attributes including a swerving driver or the like.

The software application 120 may cause a notification system 124 to generate an electronic message with a notification of the anomaly including a time of the anomaly, a location, vehicles impacted, a predicted travel route of the anomaly, and the like. The electronic message may include a Vehicle-to-Vehicle (V2V) communication, a Vehicle-to-Everything (V2E) communication, and the like. The notification system 124 may transmit the electronic message to the distribution network 130. For example, the notification system 124 may transmit / broadcast an anomaly notification 142 and an anomaly notification 144 to a vehicle 132 and a vehicle 134, respectively, within the distribution network 130.

In addition, the software application 120 may also cause an electronic message to be output / displayed on a graphical user interface (GUI) 126 within the vehicle 110 such as a display screen of an infotainment system or other console. The electronic message may include information about the anomaly including a travel path of the anomalous vehicle and any other dangerous attributes or warnings.

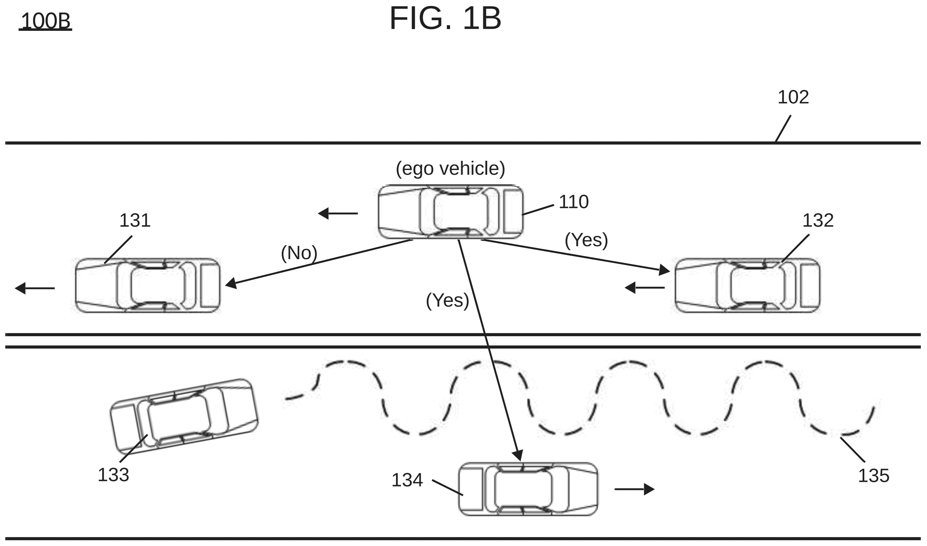

FIG. 1B illustrates a process 100B of detecting an anomaly/event within a vehicle environment according to an example of the instant solution. Referring to FIG. 1B, the vehicle 110 may be travelling along a road 102 in a lane going a first direction. The vehicle 110 may also be collecting sensor data of the environment, and static attributes of the environment, and detecting if any anomalies are present based on the data. If an anomaly/event is detected, the vehicle 110 may dynamically determine a distribution network for notifying the other vehicles on the road about the anomaly. Here, the vehicle 110 may analyze the contextual attributes of the environment to determine the distribution network.

In one example of the instant solution, when the vehicle 110 travels along a road and collects sensor data, it begins with data acquisition, which is the raw, unprocessed information gathered from sensors, such as speed, position, and acceleration. This data represents isolated observations (e.g., 25 mph, position p, time t). The vehicle processes this data to convert it into information, which is achieved by recognizing patterns and providing contextual meaning (e.g., Vehicle 110 is moving at 25 mph at position p and time t, which is relevant to understanding its current state). Information further develops when multiple vehicles provide similar data, allowing comparisons and assessments of traffic conditions, road geometry, or potential hazards. To transform this information into knowledge, the system must analyze the processed data using AI models and contextual attributes. This analysis identifies high-level patterns, such as detecting that Vehicle 110 is swerving or deviating from expected behavior based on comparisons with previous data and contextual features. This knowledge is derived from the correlation of information over time and space, for example, recognizing a weaving vehicle that presents a safety hazard to others. Distinguishing between data, information, and knowledge allows the system to effectively generate actionable insights that enhance the safety of the distribution network by promptly and accurately notifying affected vehicles within the generated network.

In this example, the vehicle 110 observes and detects a vehicle 133 which is swerving. Here, the vehicle 110 predicts a future travel path 135 of the vehicle 133 based on the contextual attributes of the environment. In some embodiments, the anomaly may be detected using logic that is hardcoded into the software application 120. As another example, an AI model may be used to predict the future travel path 135. The vehicle 110 then determines which other vehicles in the environment are affected by the future travel path 135. Here, the closest vehicle to the vehicle 133 suffering the anomaly is a vehicle 131. However, the vehicle 131 is travelling in an opposite direction and is not within the future travel path of the vehicle 133, nor is it within a predetermined distance of the future travel path 135. Therefore, the vehicle 131 does not need to be included in the distribution network because it's irrelevant.

Meanwhile, a vehicle 132 and a vehicle 134 are determined to be within the future travel path 135 of the vehicle 133 that is acting in an anomalous manner. This determination may also be generated by the AI model. The vehicle 110 may include the vehicle 132 and the vehicle 134 in the distribution network of the notification of the anomaly caused by the future travel path 135 of the vehicle 133. Therefore, the vehicle 110 may transmit a notification / alert to each of the vehicle 132 and the vehicle 134 with a warning and a location of the vehicle 133. The notification may also include the future travel path 135. The notification may be displayed on a display device within the vehicle 132 and the vehicle 134.

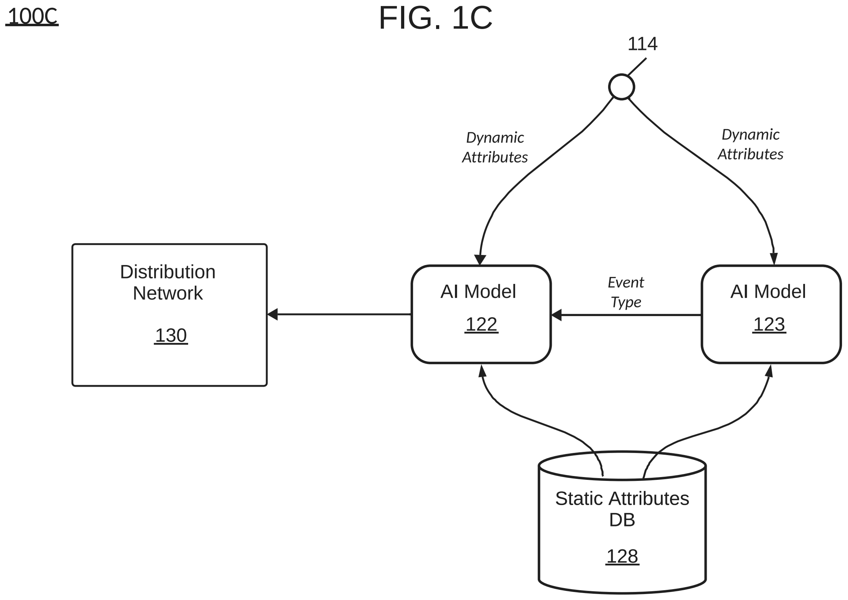

FIG. 1C illustrates a process 100C of dynamically generating the distribution network according to an example of the instant solution. Referring to FIG. 1C, the AI model 122 may be part of a larger AI model service or ensemble. In this example, the software application 120 also includes an AI model 123 that is capable of predicting a type of the anomaly, from among a plurality of different types. As an example, the AI model 123 may be a classification model, or the like, which is able to identify an answer from among a predetermined set of answers that are possible. Here, the AI model 123 receives static attributes of the environment from the static attributes database 128, and receives dynamic attributes from the sensor 114. The AI model 123 predicts the type of anomaly based on the combination of dynamic and static attributes.

In this example, the AI model 122 receives the static attributes from the static attributes database 128 and the dynamic attributes from the sensor 114. The AI model 122 also receives the type of anomaly determined by the AI model 123. Here, the AI model 122 can generate or otherwise determine the distribution network 130 based on the contextual attributes of the environment and the type of anomaly output by the AI model 123.

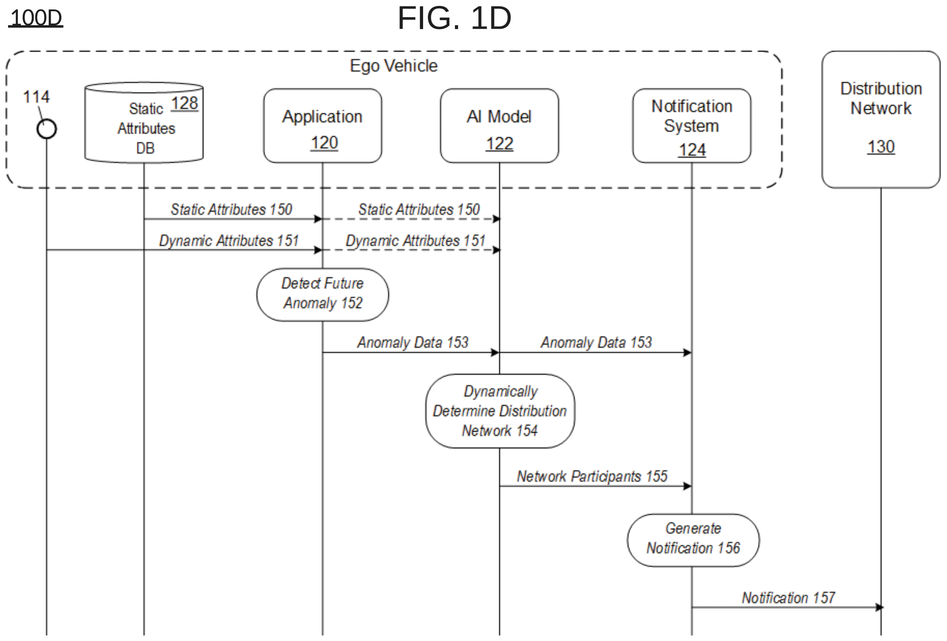

FIG. 1D illustrates a communication sequence 100D for notifying a distribution network of a detected anomaly (or knowledge) according to an example of the instant solution. FIG. 1D illustrates an example of a communication sequence that may be performed between the components that are shown in the example of FIG. 1A. Referring to FIG. 1D, the software application 120 may receive contextual attributes of an environment of an ego vehicle. Here, the software application 120 receives static attributes from a static attributes database 128, in 150. The software application 120 also receives dynamic attributes detected by a sensor 114, in 151. The static attributes and the dynamic attributes are also transferred to the AI model 122.

In 152, the software application 120 detects a future anomaly in the environment based on the contextual attributes. In another embodiment, a prediction is performed to determine if the current knowledge is beneficial, relevant to entities. In 153, the software application 120 sends data about the predicted anomaly to the AI model 122. The data may include a future location of the anomaly, a time of the anomaly, vehicles impacted by the anomaly, geographic location data of the anomaly, and the like. The AI model 122 may dynamically determine the distribution network 130, in 154. The distribution network 130 may be formed or otherwise determined based on the anomaly data and the contextual attributes of the environment. In 155, the AI model 122 outputs the distribution network parameters to the notification system 124. In 156, the notification system 124 generates a notification, and in 157, the notification system 124 sends the notification to the vehicles and/or infrastructure, equipment, etc. within the distribution network 130.

Although not shown in the example of FIG. 1D, the notification system 124 may continually broadcast or otherwise transmit updated information about the anomaly. The frequency of the updates may also be dynamically determined by the AI model 122 during the distribution network determination process.

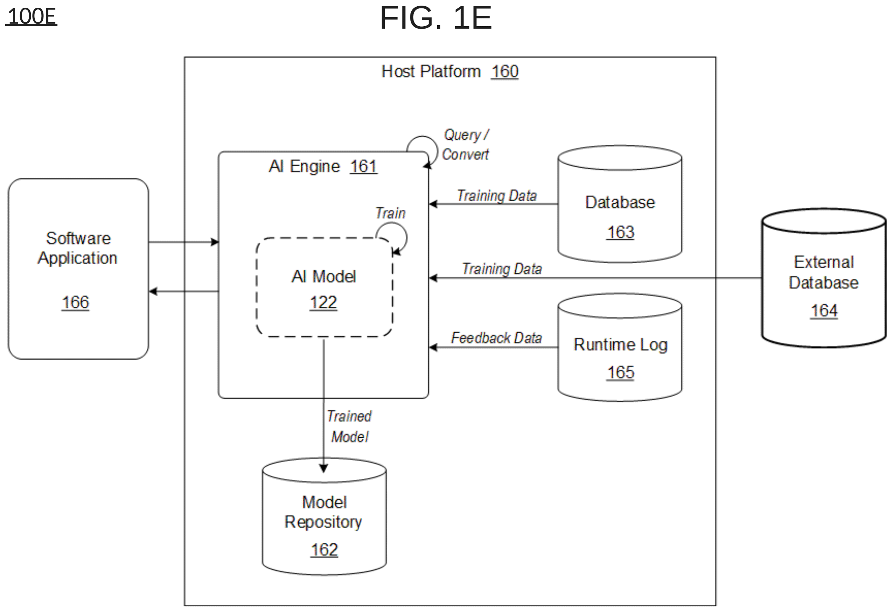

FIG. 1E illustrates a process 100E of training the at least one AI model 122 according to an example of the instant solution. Referring to FIG. 1E, a host platform 160 may host a software application 166, which includes access to a training script, service, integrated development environment, etc., and which can be used to train and retrain AI models, machine learning models, and the like. In this example, the software application 166 may include a user interface accessible by a user device (not shown) over a network or through a local connection. For example, the software application 166 may be embodied as a web application that can be accessed at a network address, URL, etc., by a device. As another example, the software application 166 may be locally or remotely installed on a computing device where it is accessed and used locally.

The software application 166 may be used to design a model, such as an AI model that can dynamically generate a distribution network based on an anomaly within a driving environment of a group of vehicles. The model can be executed / trained based on the training data established via the user interface. For example, the user interface may be used to build a new model. The training data for training such a new model may be provided from a training data store such as a database 163 which includes training samples from the web, from customers, and the like. The training data may include mappings of anomalies to distribution network parameters, and the like. As another example, the training data may be pulled from one or more external data stores 164 such as publicly available sites, etc. As another example, the training data may include runtime data (*e.g*., feedback data, etc.) from a runtime log 165. The runtime log 165 may include feedback about the predictions made by the at least one AI model 122 such as indications of whether the generated distribution network is accurate.

During training, the at least one AI model 122 may be executed on training data via an AI engine 161 of the host platform 160. Through the execution, which may be iteratively performed, the at least one AI model 122 may learn how to predict when a substance will no longer be available based on compliancy issues. The at least one AI model 122 may learn how to determine an alternative substance for the substance that will no longer be compliant, and the like. As another example, the at least one AI model 122 may be a generative AI model with a neural network capability. In some embodiments, the generative AI model may be trained, fine-tuned, or otherwise enhanced to generate digital orders based on historical digital orders. When the model is fully trained, it may be stored within the model repository 162 via the software application 156.

As another example, the software application 166 may be used to retrain the at least one AI model 122 after the model has already been deployed. The retraining process may use executional results that have already been generated / output by the at least one AI model 122 in a live environment (including any user feedback, etc.) to retrain the at least one AI model 122. For example, users may provide feedback in the form of "yes" and "no" to indicate whether a predicted availability of a substance was correct. This data may be captured and stored within the runtime log 165 or other data store within the live environment and can be subsequently used to retrain the at least one AI model 122.

In some embodiments, the AI model may be used to infer the knowledge (*e.g*., events, anomalies, etc.) about an environment of a vehicle based on contextual attributes of the environment, and identify the other agents (*e.g*., vehicles, cameras, equipment, devices, etc.) within the environment that are relevant to the knowledge". Anomaly is one example where knowledge is generated by analyzing the driving data, information and conclude that the driver type is weaver. Determining relevance of other agents (e.g., vehicles, remote server,) based on contextual attributes. Knowledge may be distributed to different participants in the area of the vehicle based on different criteria.

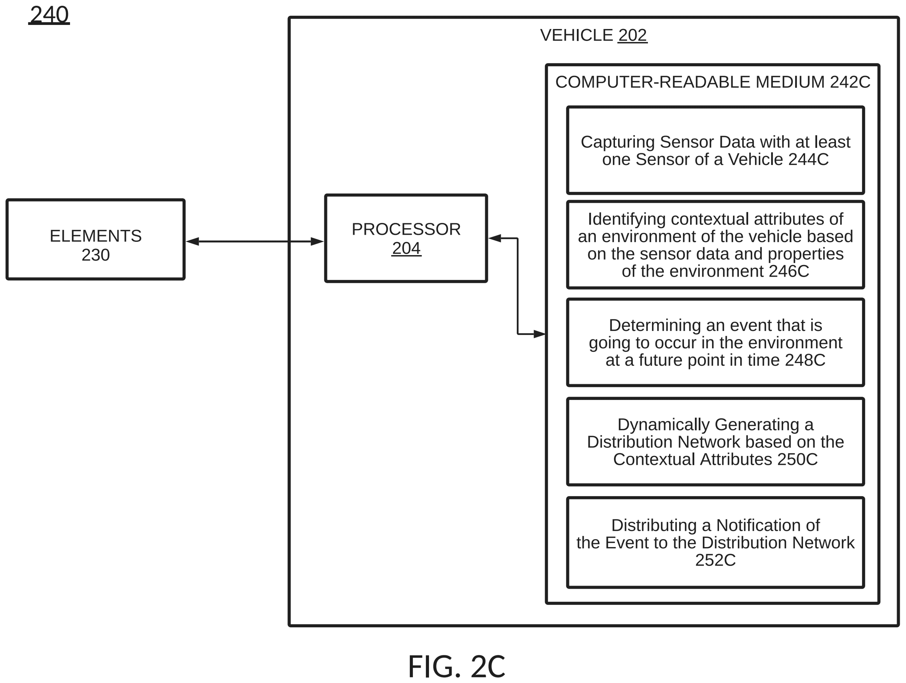

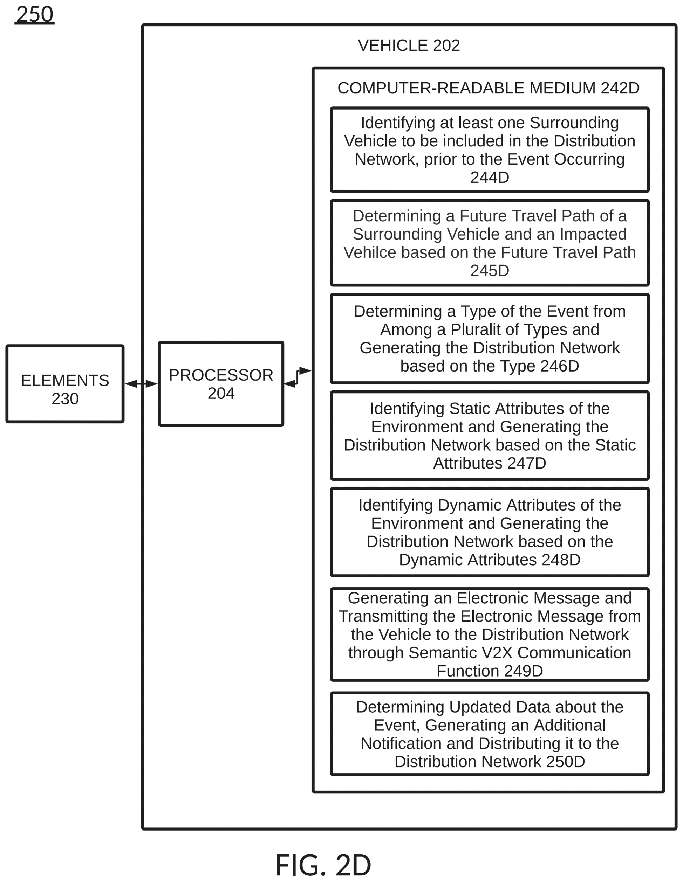

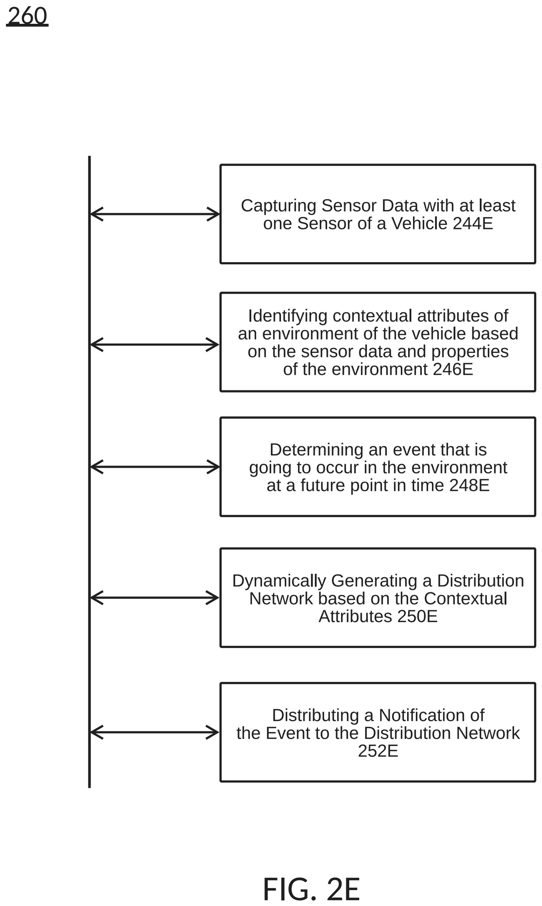

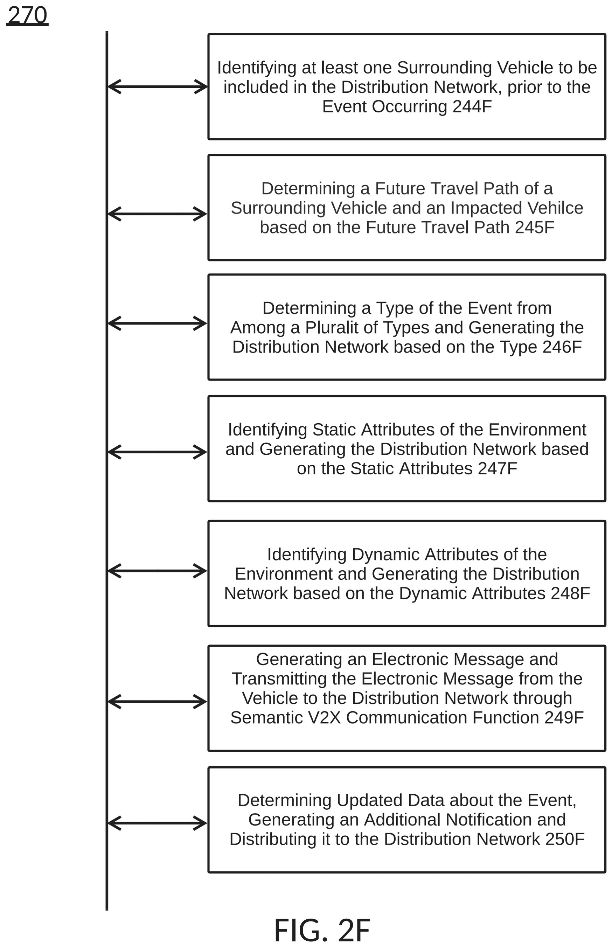

Although the flow diagrams depicted herein, such as FIG. 2C, FIG. 2D, FIG. 2E, and FIG. 2F, may be presented as separate flow diagrams, the steps depicted therein may be utilized in conjunction with one another with departing from the scope of the instant solution. Any of the operations in one flow diagram may be utilized and shared with another flow diagram. No example operation is intended to limit the subject matter of any feature, structure, or characteristic of the instant solution or corresponding claim.

It is important to note that all the flow diagrams and corresponding steps and processes derived from FIG. 2C, FIG. 2D, FIG. 2E, and FIG. 2F may be part of a same process or may share sub-processes/steps with one another thus making the diagrams combinable into a single preferred configuration that does not require any one specific operation but which performs certain operations from one example process and from one or more additional processes. All the example processes are related to the same physical system and can be used separately or interchangeably.

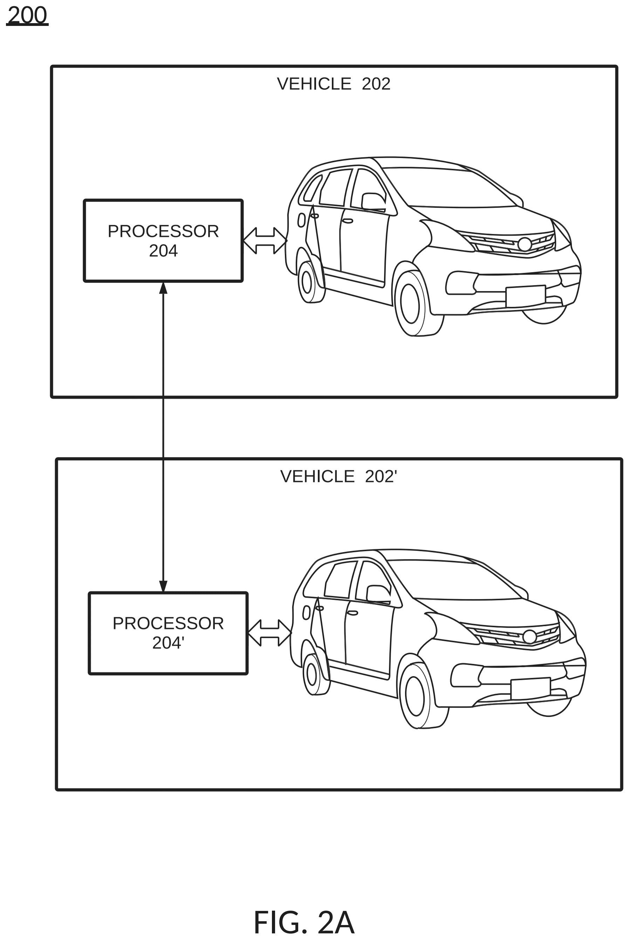

FIG. 2A illustrates a vehicle network diagram 200, according to the instant solution. The network comprises elements including a vehicle 202 including a processor 204, as well as a vehicle 202' including a processor 204'. The vehicles 202, 202' communicate with one another via the processors 204, 204', as well as other elements (not shown) including transceivers, transmitters, receivers, storage, sensors, and other elements capable of providing communication. The communication between the vehicles 202, and 202' can occur directly, via a private and/or a public network (not shown), or via other vehicles and elements comprising one or more of a processor, memory, and/or software. Although depicted as single vehicles and processors, a plurality of vehicles and processors may be present. One or more of the applications, features, steps, solutions, etc., described and/or depicted herein may be utilized and/or provided by the instant elements.

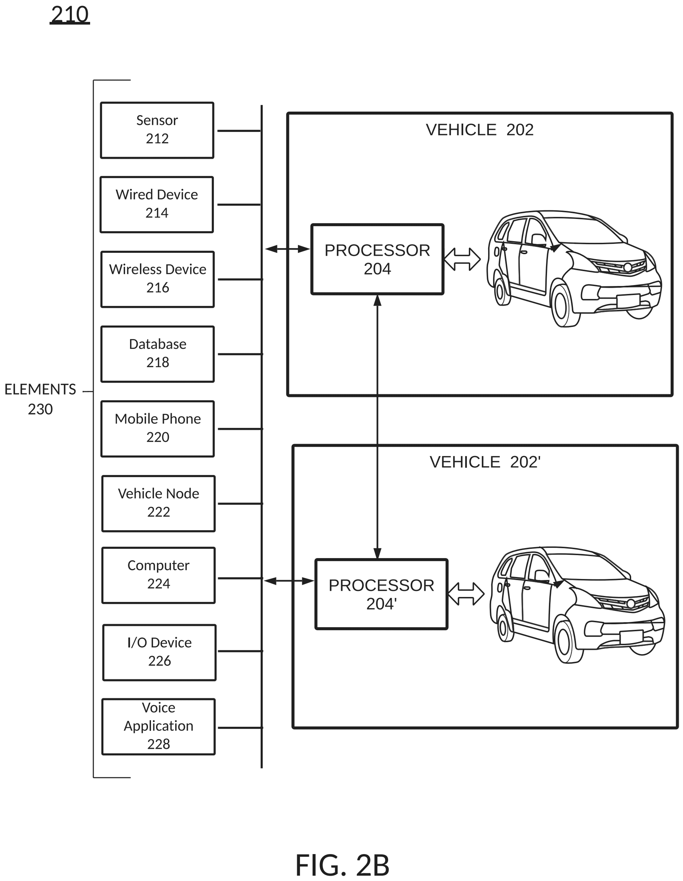

FIG. 2B illustrates another vehicle network diagram 210, according to the instant solution. The network comprises elements including a vehicle 202 including a processor 204, as well as a vehicle 202' including a processor 204'. The vehicles 202, 202' communicate with one another via the processors 204, 204', as well as other elements (not shown), including transceivers, transmitters, receivers, storage, sensors, and other elements capable of providing communication. The communication between the vehicles 202, and 202' can occur directly, via a private and/or a public network (not shown), or via other vehicles and elements comprising one or more of a processor, memory, and software. The processors 204, 204' can further communicate with one or more elements 230 including sensor 212, wired device 214, wireless device 216, database 218, mobile phone 220, vehicle node 222, computer 224, input/output (I/O) device 226, and voice application 228. The processors 204, 204' can further communicate with elements comprising one or more of a processor, memory, and/or software.

Although depicted as single vehicles, processors and elements, a plurality of vehicles, processors and elements may be present. Information or communication can occur to and/or from any of the processors 204, 204' and elements 230. For example, the mobile phone 220 may provide information to the processor 204, which may initiate the vehicle 202 to take an action, may further provide the information or additional information to the processor 204', which may initiate the vehicle 202' to take an action, and may further provide the information or additional information to the mobile phone 220, the vehicle 222, and/or the computer 224. One or more of the applications, features, steps, solutions, etc., described and/or depicted herein may be utilized and/or provided by the instant elements.

FIG. 2C illustrates yet another vehicle network diagram 240, according to the instant solution. The network comprises elements including a vehicle 202, a processor 204, and a non-transitory computer-readable storage medium 242C. The processor 204 is communicatively coupled to the non-transitory computer-readable storage medium 242C and elements 230 (which were depicted in FIG. 2B). The vehicle 202 may be a vehicle, server, or any device with a processor and memory.

The processor 204 performs one or more of capturing sensor data with at least one sensor of a vehicle in 244C, identifying contextual attributes of an environment of the vehicle based on the sensor data and properties of the environment in 246C, determining an event that is going to occur in the environment at a future point in time based on the contextual attributes in 248C, dynamically generating a distribution network based on based on execution of an AI model the contextual attributes in 250C, and distributing a notification of the event to the generated distribution network in 252C.

FIG. 2D illustrates a further vehicle network diagram 250, according to the instant solution. The network comprises elements including a vehicle 202, a processor 204, and a non-transitory computer-readable storage medium 242D. The processor 204 is communicatively coupled to the non-transitory computer-readable storage medium 242D and elements 230 (which were depicted in FIG. 2B). The vehicle 202 may be a vehicle, server or any device with a processor and memory.

The processor 204 performs one or more of identifying at least one of a surrounding vehicle and a surrounding equipment to be included in the distribution network based on the contextual attributes, prior to the event occurring in 244D, determining a future travel path of a surrounding vehicle based on the contextual attributes and identifying at least one different vehicle that is impacted by the future travel path in 245D, wherein the generating includes generating the distribution network to include the at least one different vehicle determining a type of the event from among a plurality of possible event types based on execution of the AI model on the sensor data, and generating the distribution network based on the type of event in 246D, identifying static attributes of the environment comprising at least one road geometry of the environment and traffic rules of the environment, and executing the AI model on the static attributes in 247D, identifying dynamic attributes of the environment include at least one traffic conditions of the environment and objects within the environment, and executing the AI model on the dynamic attributes in 248D, generating an electronic message that comprises an identifier of the event, and transmitting the electronic message from the vehicle to the distribution network via vehicle-to-everything (V2X) communication in 249D, and determining updated data about the event from additional contextual attributes of the environment, generating an additional notification including the updated data about the event, and distributing the additional notification to the generated distribution network in 250D.

While this example describes in detail only one vehicle 202, multiple such nodes may be connected, such as via a network or blockchain. It should be understood that the vehicle 202 may include additional components and that some of the components described herein may be removed and/or modified without departing from the scope of the instant application. The vehicle 202 may have a computing device or a server computer, or the like, and may include a processor 204, which may be a semiconductor-based microprocessor, a central processing unit (CPU), an application-specific integrated circuit (ASIC), a field-programmable gate array (FPGA), and/or another hardware device. Although a single processor 204 is depicted, it should be understood that the vehicle 202 may include multiple processors, multiple cores, or the like without departing from the scope of the instant application. The vehicle 202 may be a vehicle, server or any device with a processor and memory.

The processors and/or computer-readable storage medium may fully or partially reside in the interior or exterior of the vehicles. The steps or features stored in the computer-readable storage medium may be fully or partially performed by any of the processors and/or elements in any order. Additionally, one or more steps or features may be added, omitted, combined, performed at a later time, etc.

FIG. 2E illustrates a flow diagram 260, according to the instant solution. Referring to FIG. 2E, the instant solution includes one or more of storing a vehicle-to-everything (V2X) communication function of a vehicle in 244E, detecting an event on a road the vehicle is travelling in 246E, identifying contextual attributes of the road based on sensor data captured of the road in 248E, converting the V2X communication function into a transformed V2X communication function based on the contextual attributes of the road, in 250E, and distributing a notification of the event to at least one other vehicle on the road based on the transformed V2X communication function in 252E.

FIG. 2F illustrates another flow diagram 270, according to the instant solution. Referring to FIG. 2F, the instant solution includes one or more of identifying at least one of a surrounding vehicle and a surrounding equipment to be included in the distribution network based on the contextual attributes, prior to the event occurring in 244F, determining a future travel path of a surrounding vehicle based on the contextual attributes and identifying at least one different vehicle that is impacted by the future travel path in 245F, wherein the generating includes generating the distribution network to include the at least one different vehicle determining a type of the event from among a plurality of possible event types based on execution of the AI model on the sensor data, and generating the distribution network based on the type of event in 246F, identifying static attributes of the environment comprising at least one road geometry of the environment and traffic rules of the environment, and executing the AI model on the static attributes in 247F, identifying dynamic attributes of the environment include at least one traffic conditions of the environment and objects within the environment, and executing the AI model on the dynamic attributes in 248F, generating an electronic message that comprises an identifier of the event, and transmitting the electronic message from the vehicle to the distribution network via vehicle-to-everything (V2X) communication in 249F, and determining updated data about the event from additional contextual attributes of the environment, generating an additional notification including the updated data about the event, and distributing the additional notification to the generated distribution network in 250F.

Technological advancements typically build upon the fundamentals of predecessor technologies; such is the case with Artificial Intelligence (AI) models. An AI classification system describes the stages of AI progression. The first classification is known as "Reactive Machines," followed by present-day AI classification "Limited Memory Machines" (also known as "Artificial Narrow Intelligence"), then progressing to "Theory of Mind" (also known as "Artificial General Intelligence"), and reaching the AI classification "Self-Aware" (also known as "Artificial Superintelligence"). Present-day Limited Memory Machines are a growing group of AI models built upon the foundation of its predecessor, Reactive Machines. Reactive Machines emulate human responses to stimuli; however, they are limited in their capabilities as they cannot typically learn from prior experience. Once the AI model's learning abilities emerged, its classification was promoted to Limited Memory Machines. In this present-day classification, AI models learn from large volumes of data, detect patterns, solve problems, generate and predict data, and the like, while inheriting all of the capabilities of Reactive Machines. Examples of AI models classified as Limited Memory Machines include, but are not limited to, Chatbots, Virtual Assistants, Machine Learning (ML), Deep Learning (DL), Natural Language Processing (NLP), Generative AI (GenAI) models, and any future AI models that are yet to be developed possessing characteristics of Limited Memory Machines. Generative AI models combine Limited Memory Machine technologies, incorporating ML and DL, forming the foundational building blocks of future AI models. For example, Theory of Mind is the next progression of AI that may be able to perceive, connect, and react by generating appropriate reactions in response to an entity with which the AI model is interacting; all of these capabilities rely on the fundamentals of Generative AI. Furthermore, in an evolution into the Self-Aware classification, AI models will be able to understand and evoke emotions in the entities they interact with, as well as possess their own emotions, beliefs, and needs, all of which rely on the Generative AI fundamentals of learning from experiences to generate and draw conclusions about itself and its surroundings. Generative AI models are integral and core to future artificial intelligence models. As described herein, Generative AI refers to present-day Generative AI models and future AI models.

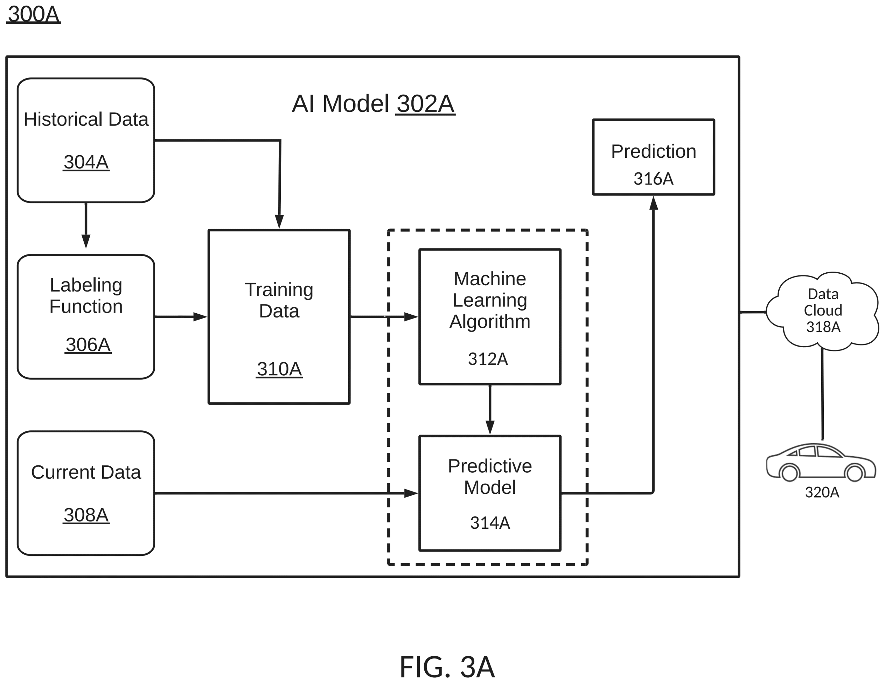

FIG. 3A illustrates the AI model 302A, according to an example of the instant solution. Any of the processors mentioned herein may use the AI model 302A. The AI model 302A may operate in a training phase followed by an inference phase. Alternatively, or additionally, an already-trained model may be provided for the AI model 302A, wherein the model may operate in the inference phase. In the training phase, a specified subset of data is fed to a machine learning algorithm 312A of the AI model 302A to train a predictive model 314A. For example, the AI model 302A can be trained by showing the machine learning algorithm 312A curated data sets comprising training data 310A, to help the machine learning algorithm 312A learn patterns and relationships. The training phase can involve trial and error, as well as showing the AI model 302A examples of desired predictions for optimal charge levels based on inputs provided in the training data 310A. In a further embodiment, the machine learning algorithm 312A may comprise a set of rules used by the AI model 302A to learn.

In some embodiments, the AI model 302A may operate in the inference phase when the model is trained. In the inference phase, the AI model 302A may use the intelligence it gathered during the training phase to generate a prediction 316A from a predictive model 314A based on current data 308A. For example, the current data 308A may comprise new, previously unseen data. The predictive model 314A may be a computer program that the machine learning algorithm 312A creates or modifies during the training phase to generate a solution in the form of the prediction 316A. In some embodiments, during the training phase, the AI model 302A receives historical data 304A.

In some embodiments, during the training phase, the AI model 302A applies a labeling function 306A to the historical data 304A to generate training data 310A for the machine learning algorithm 312A. The labeling function 306A may comprise associating each of one or more portions of the historical data 304A with one or more corresponding informative labels that provide a context for the one or more portions, so that the machine learning algorithm 312A can learn from the historical data 304A.

In some embodiments, during the training phase, the training data 310A is applied to the machine learning algorithm 312A. For example, the machine learning algorithm 312A may comprise a set of instructions used to analyze data and perform tasks including one or more of pattern recognition, classification, or prediction. Pattern recognition may include finding patterns in the training data 310A. Classification may include grouping the training data 310A into one or more categories. Prediction may include predicting one or more output values from the training data 310A. The machine learning algorithm 312A may be used to discover new patterns and insights in the training data 310A. In a further embodiment, the machine learning algorithm 312A may include any of K-means, event detection, K-nearest neighbor, linear regression, logistic regression, a support vector machine, a decision tree, a neural network, or any of various combinations thereof. K-means can determine a plurality of clusters for the training data 310A, pick a centroid for each cluster, and then group data points with the closest centroids. Event detection can identify data points of the training data 310A that fall outside of a range of defined or specified parameters. K-Nearest-Neighbor can determine a plurality of groups for the training data 310A, and then perform an estimate of how likely a data point is to be a member of one group or another of the plurality of groups. Linear regression can identify correlations between data represented using variables. Logistic regression and/or support vector machines can be used to perform classification tasks such as helping to categorize data into distinct groups. The decision tree can formulate a prediction to estimate an outcome by splitting data into branches based on feature values, improving classification accuracy. The neural network can use deep learning to process data, with interconnected nodes or neurons arranged in a layered structure that resembles the human brain.

In some embodiments, during the inference phase, the predictive model 314A generates the prediction 316A by applying statistical algorithms and the machine learning algorithm 312A to current data 308A. In some embodiments, the current data 308A may comprise charge level data for the battery of a vehicle. In some embodiments, the predictive model 314A comprises any of a clustering process, a decision tree, a regression model, a time series method, or any of various combinations thereof, to generate the prediction 316A. In a further embodiment, the predictive model 314A and the machine learning algorithm 312A may be implemented using the same set of hardware and/or software elements. In another further embodiment, the predictive model 314A and the machine learning algorithm 312A may share a subset of hardware and/or software elements. The clustering process may classify different data points or observations into groups or clusters based on similarities, to determine underlying patterns in the data received by a server. Using clustering, the AI model 302A can process large amounts of unstructured data to identify trends and patterns. The decision tree can formulate a prediction to estimate an outcome by splitting data into branches based on feature values, improving classification accuracy. The decision tree may implement a divide-and-conquer splitting strategy for classifying the received data. Divide and conquer splitting is a technique used to break down large problems into smaller, more manageable subproblems. Divide and conquer splitting may render each of the subproblems quick and easy to solve, wherein the solutions to each of the subproblems is then combined to solve the large problem. Similarly, random forest algorithms may combine the outputs of multiple decision trees to reach a single result. A regression model may determine one or more correlations between variables used to represent the received data. Linear regression, for instance, may represent a linear relationship between two variables. Time series methods can model historical data as a series of data points plotted in chronological order, and used to project future trends in the data.

In some embodiments, the AI model 302A is trained using a neural network training capability with historical data 304A comprising past optimal charge level data. The AI model 302A can be retrained using the prediction 316A. In a further embodiment, the AI model 302A may be implemented by at least one of developing the model, deploying the model, accessing the model, selecting the model, running the model, optimizing the model, monitoring the model, maintaining the model, or any of various combinations thereof. In another embodiment, the AI model 302A may include model feedback data comprising a collection of information used to improve the model using a feedback loop. The feedback loop can be an algorithm that allows the AI model 302A to learn from errors and improve its accuracy over time. When an error is identified in an output of the AI model 302A, the error is fed back into the model as an input, in the form of the model feedback data, to help the AI model 302A avoid similar errors in the future.

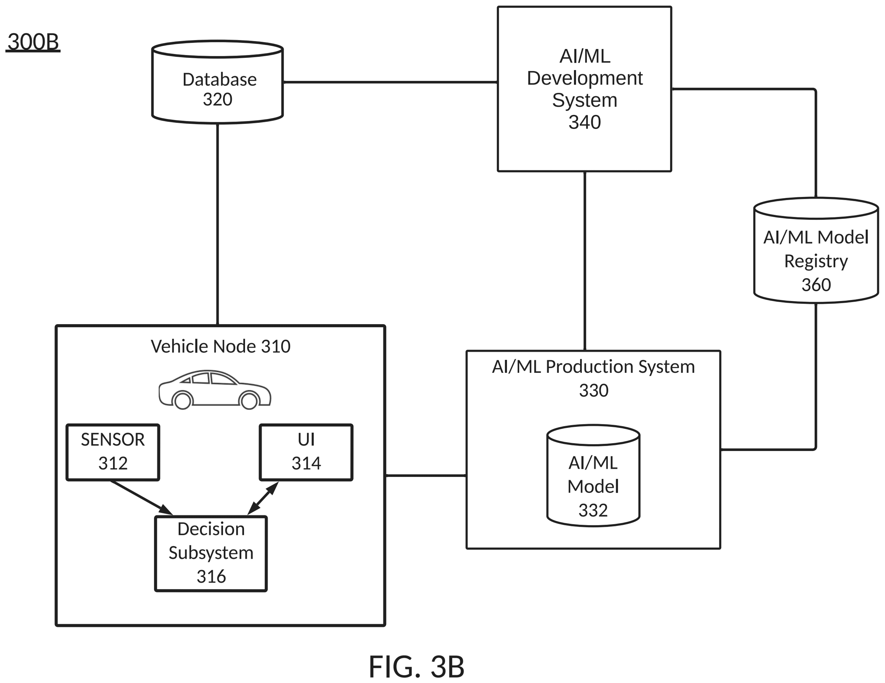

FIG. 3B illustrates an AI/ML network diagram 300B that supports AI-assisted vehicle or occupant decision points. Other branches of AI, such as, but not limited to, computer vision, fuzzy logic, expert systems, neural networks/deep learning, generative AI, and natural language processing, may all be employed in developing the AI model shown in these configurations. Further, the AI model included in these configurations may not be limited to a particular AI algorithm. Any algorithm or combination of algorithms related to supervised, unsupervised, and reinforcement learning algorithms may be employed.

In one configuration of the instant solution, Generative AI (GenAI) may be used by the instant solution in the transformation of data. Vehicles are equipped with diverse sensors, cameras, radars, and LiDARs, which collect a vast array of data, such as images, speed readings, GPS data, and acceleration metrics. However, raw data, once acquired, undergoes preprocessing that may involve normalization, anonymization, missing value imputation, or noise reduction to allow the data to be further used effectively.

The GenAI executes data augmentation following the preprocessing of the data. Due to the limitation of datasets in capturing the vast complexity of real-world vehicle scenarios, augmentation tools are employed to expand the dataset. This might involve image-specific transformations like rotations, translations, or brightness adjustments. For non-image data, techniques like jittering can be used to introduce synthetic noise, simulating a broader set of conditions.

In the instant solution, data generation may then be performed on the data. Tools like Generative Adversarial Networks (GANs) and Variational Autoencoders (VAEs) are trained on existing datasets to generate new, plausible data samples. For example, GANs might be tasked with crafting images showcasing vehicles in uncharted conditions or from unique perspectives. As another example, the synthesis of sensor data may be performed to model and create synthetic readings for such scenarios, enabling thorough system testing without actual physical encounters. A critical step in the use of GenAI, given the safety-critical nature of vehicles, may be validation. This validation might include the output data being compared with real-world datasets or using specialized tools like a GAN discriminator to gauge the realism of the crafted samples. The AI model may be implemented, where implemented may include at least one of: developing the model, deploying the model, accessing the model, selecting the model, running the model, optimizing the model, monitoring the model, maintaining the model, etc.

Vehicle node 310 may include a plurality of sensors 312 that may include but are not limited to, light sensors, weight sensors, cameras, LiDAR, and radar. In some configurations of the instant solution, these sensors 312 send data to a database 320 that stores data about the vehicle and occupants of the vehicle. In some configurations of the instant solution, these sensors 312 send data to one or more decision subsystems 316 in vehicle node 310 to assist in decision-making.

Vehicle node 310 may include one or more user interfaces (UIs) 314, such as a steering wheel, navigation controls, audio/video controls, temperature controls, etc. In some configurations of the instant solution, these UIs 314 send data to a database 320 that stores event data about the UIs 314 that includes but is not limited to selection, state, and display data. In some configurations of the instant solution, these UIs 314 send data to one or more decision subsystems 316 in vehicle node 310 to assist decision-making.

Vehicle node 310 may include one or more decision subsystems 316 that drive a decision-making process around, but not limited to, vehicle control, temperature control, charging control, etc. In some configurations of the instant solution, the decision subsystems 316 gather data from one or more sensors 312 to aid in the decision-making process. In some configurations of the instant solution, a decision subsystem 316 may gather data from one or more UIs 314 to aid in the decision-making process. In some configurations of the instant solution, a decision subsystem 316 may provide feedback to a UI 314.

An AI/ML production system 330 may be used by a decision subsystem 316 in a vehicle node 310 to assist in its decision-making process. The AI/ML production system 330 includes one or more AI/ML models 332 that are executed to retrieve the needed data, such as, but not limited to, a prediction, a categorization, a UI prompt, etc. In some configurations of the instant solution, an AI/ML production system 330 is hosted on a server. In some configurations of the instant solution, the AI/ML production system 330 is cloud-hosted. In some configurations of the instant solution, the AI/ML production system 330 is deployed in a distributed multi-node architecture. In some configurations of the instant solution, the AI production system resides in vehicle node 310.

An AI/ML development system 340 creates one or more AI/ML models 332. In some configurations of the instant solution, the AI/ML development system 340 utilizes data in the database 320 to develop and train one or more AI models 332. In some configurations of the instant solution, the AI/ML development system 340 utilizes feedback data from one or more AI/ML production systems 330 for new model development and/or existing model re-training. In another configuration of the instant solution, the AI/ML development system 340 resides and executes on a server. In another configuration of the instant solution, the AI/ML development system 340 is cloud-hosted. In a further configuration of the instant solution, the AI/ML development system 340 utilizes a distributed data pipeline/analytics engine.

Once an AI/ML model 332 has been trained and validated in the AI/ML development system 340, it may be stored in an AI/ML model registry 360 for retrieval by either the AI/ML development system 340 or by one or more AI/ML production systems 330. The AI/ML model registry 360 resides in a dedicated server in one configuration of the instant solution. In some configurations of the instant solution, the AI/ML model registry 360 is cloud-hosted. The AI/ML model registry 360 is a distributed database in other examples of the instant solution. In further examples of the instant solution, the AI/ML model registry 360 resides in the AI/ML production system 330.

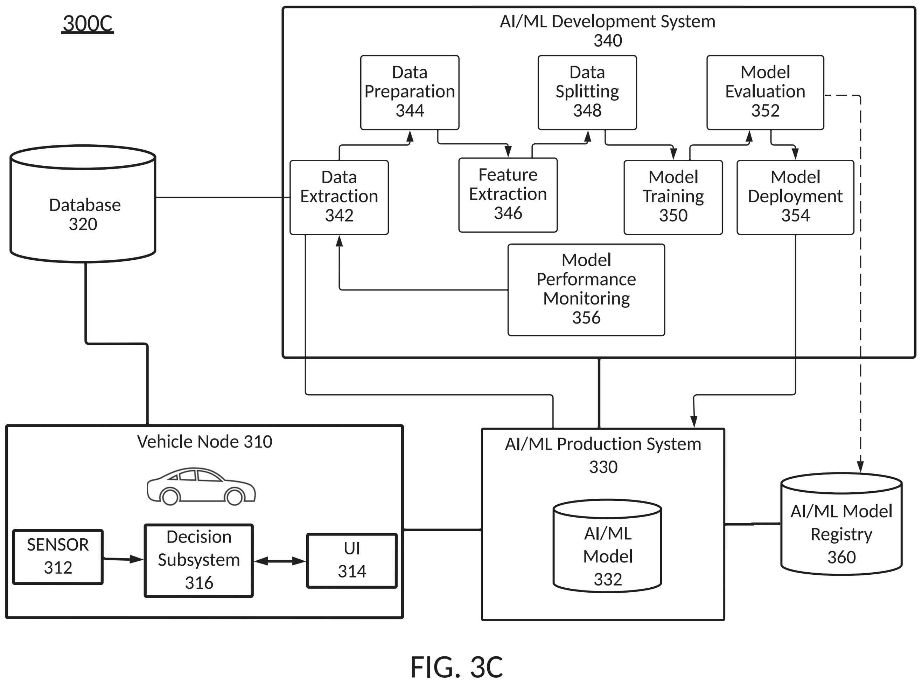

FIG. 3C illustrates a process 300C for developing one or more AI/ML models that support AI-assisted vehicle or occupant decision points. An AI/ML development system 340 executes steps to develop an AI/ML model 332 that begins with data extraction 342, in which data is loaded and ingested from one or more data sources. In some examples of the instant solution, vehicle and user data is extracted from a database 320. In some examples of the instant solution, model feedback data is extracted from one or more AI/ML production systems 330. AI Model 332 is an example of AI Model 302A.

Once the required data has been extracted 342, it must be prepared 344 for model training. In some examples of the instant solution, this step involves statistical testing of the data to see how well it reflects real-world events, its distribution, the variety of data in the dataset, etc. In some examples of the instant solution, the results of this statistical testing may lead to one or more data transformations being employed to normalize one or more values in the dataset. In some examples of the instant solution, this step includes cleaning data deemed to be noisy. A noisy dataset includes values that do not contribute to the training, such as but not limited to, null and long string values. Data preparation 344 may be a manual process or an automated process using one or more of the elements and/or functions described or depicted herein.

Features of the data are identified and extracted 346. In some examples of the instant solution, a feature of the data is internal to the prepared data from step 344. In other examples of the instant solution, a feature of the data requires a piece of prepared data from step 344 to be enriched by data from another data source to be used in developing an AI/ML model 332. In some examples of the instant solution, identifying features is a manual process or an automated process using one or more of the elements and/or functions described or depicted herein. Once the features have been identified, the values of the features are collected into a dataset that will be used to develop the AI/ML model 332.

The dataset output from feature extraction step 346 is split 348 into a training and a validation data set. The training data set is used to train the AI/ML model 332, and the validation data set is used to evaluate the performance of the AI/ML model 332 on unseen data.

The AI/ML model 332 is trained and tuned 350 using the training data set from the data splitting step 348. In this step, the training data set is fed into an AI/ML algorithm with an initial set of algorithm parameters. The performance of the AI/ML model 332 is then tested within the AI/ML development system 340 utilizing the validation data set from step 348. These steps may be repeated with adjustments to one or more algorithm parameters until the model's performance is acceptable based on various goals and/or results.

The AI/ML model 332 is evaluated 352 in a staging environment (not shown) that resembles the ultimate AI/ML production system 330. This evaluation uses a validation dataset to ensure the performance in an AI/ML production system 330 matches or exceeds expectations. In some examples of the instant solution, the validation dataset from step 348 is used. In other examples of the instant solution, one or more unseen validation datasets are used. In some examples of the instant solution, the staging environment is part of the AI/ML development system 340. In other examples of the instant solution, the staging environment is managed separately from the AI/ML development system 340. Once the AI/ML model 332 has been validated, it is stored in an AI/ML model registry 360, which can be retrieved for deployment and future updates. As before, in some configurations of the instant solution, the model evaluation step 352 is a manual process or an automated process using one or more of the elements and/or functions described or depicted herein.

Once an AI/ML model 332 has been validated and published to an AI/ML model registry 360, it may be deployed 354 to one or more AI/ML production systems 330. In some examples of the instant solution, the performance of deployed AI/ML models 332 is monitored 356 by the AI/ML development system 340. In some examples of the instant solution, AI/ML model 332 feedback data is provided by the AI/ML production system 330 to enable model performance monitoring 356. In some examples of the instant solution, the AI/ML development system 340 periodically requests feedback data for model performance monitoring 356. In some examples of the instant solution, model performance monitoring includes one or more triggers that result in the AI/ML model 332 being updated by repeating steps 342-354 with updated data from one or more data sources.

In one example, an AI development system 340 is configured to process input data and train a machine learning model 332. The system receives data from at least one database 320, and optionally one or more AI production systems 330, which may undergo a sequence of preprocessing steps before being used for training a predictive model. The AI development system 340 extracts data related to one or more of the instant features from at least one data source 320 in the data extraction stage 342. This extracted data is then processed through data preparation 344 to normalize or filter relevant information. Feature extraction 346 follows, where meaningful features are identified to improve model performance. The dataset is then split 348 into training and validation subsets.

The AI Development System 340 (serving as a machine learning server) is directed to generate a predictive model based on machine learning of the data. The system initiates model training 350 using the prepared dataset. The AI development system 340 selects an appropriate machine learning algorithm and hyperparameters to optimize predictive accuracy. The trained model undergoes model evaluation 352 using validation data to assess performance. If the model meets predefined accuracy thresholds, it is deployed 354 to an AI production system 330 and registered in the AI model registry 360 for use in real-time decision-making.

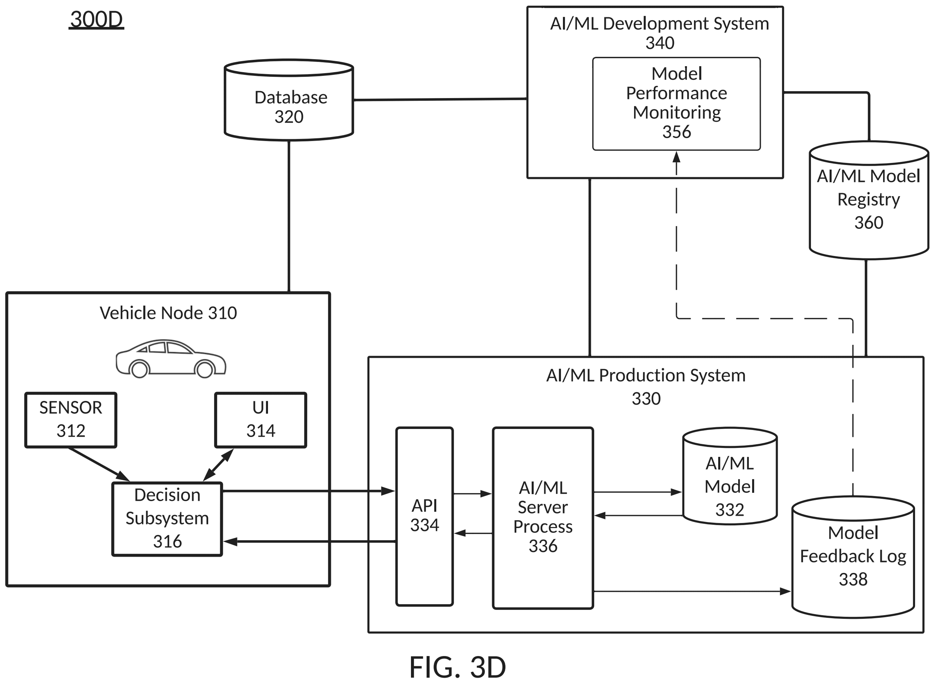

FIG. 3D illustrates a process 300D for utilizing an AI/ML model that supports AI-assisted vehicle or occupant decision points. As stated previously, the AI model utilization process depicted herein reflects ML, which is a particular branch of AI, but the instant solution is not limited to ML and is not limited to any AI algorithm or combination of algorithms.

Referring to FIG. 3D, an AI/ML production system 330 may be used by a decision subsystem 316 in vehicle node 310 to assist in its decision-making process. The AI/ML production system 330 provides an application programming interface (API) 334, executed by an AI/ML server process 336 through which requests can be made. In some examples of the instant solution, a request may include an AI/ML model 332 identifier to be executed. In some examples of the instant solution, the AI/ML model 332 to be executed is implicit based on the type of request. In some examples of the instant solution, a data payload (e.g., to be input to the model during execution) is included in the request. In some examples of the instant solution, the data payload includes sensor 312 data received from vehicle node 310. In some examples of the instant solution, the data payload includes UI 314 data from vehicle node 310. In some examples of the instant solution, the data payload includes data from other vehicle node 310 subsystems (not shown), including but not limited to, occupant data subsystems. In some examples of the instant solution, one or more elements or nodes 320, 330, 340, or 360 may be located in the vehicle node 310.

Upon receiving the API 334 request, the AI/ML server process 336 may need to transform the data payload or portions of the data payload to be valid feature values in an AI/ML model 332. Data transformation may include but is not limited to combining data values, normalizing data values, and enriching the incoming data with data from other data sources. Once any required data transformation occurs, the AI/ML server process 336 executes the appropriate AI/ML model 332 using the transformed input data. Upon receiving the execution result, the AI/ML server process 336 responds to the API caller, which is a decision subsystem 316 of vehicle node 310. In some examples of the instant solution, the response may result in an update to a UI 314 in vehicle node 310. In some examples of the instant solution, the response includes a request identifier that can be used later by the decision subsystem 316 to provide feedback on the AI/ML model 332 performance. Further, in some configurations of the instant solution, immediate performance feedback may be recorded into a model feedback log 338 by the AI/ML server process 336. In some examples of the instant solution, execution model failure is a reason for immediate feedback.

In some examples of the instant solution, the API 334 includes an interface to provide AI/ML model 332 feedback after an AI/ML model 332 execution response has been processed. This mechanism may be used to evaluate the performance of the AI/ML model 332 by enabling the API caller to provide feedback on the accuracy of the model results. For example, if the AI/ML model 332 provided an estimated time of arrival of 20 minutes, but the actual travel time was 24 minutes, that may be indicated. In some examples of the instant solution, the feedback interface includes the identifier of the initial request so that it can be used to associate the feedback with the request. Upon receiving a call into the feedback interface of API 334, the AI/ML server process 336 records the feedback in the model feedback log 338. In some examples of the instant solution, the data in this model feedback log 338 is provided to model performance monitoring 356 in the AI/ML development system 340. This log data is streamed to the AI/ML development system 340 in one example of the instant solution. In some examples of the instant solution, the log data is provided upon request. In some examples and features of the instant solution, the model feedback records in the model feedback log 338 are used as input for retraining the AI model 332.

Model retraining involves repeating steps 342-354 using the current data in the data source along with the model feedback log 338. In some examples and features of the instant solution, the AI model 332 is retrained periodically as a matter of business process to consider the latest data and/or retrained based on a trigger, such as, but not limited to, a recent model accuracy falling below a predetermined threshold. In some examples and features of the instant solution, the model feedback data 338 is used as input to determine the recent model accuracy.

A number of the steps/features that may utilize the AI/ML process described herein include one or more of: A number of the steps/features that may utilize the AI/ML process described herein include one or more of: capturing sensor data with at least one sensor of a vehicle, identifying contextual attributes of an environment of the vehicle based on the sensor data and properties of the environment, determining an event that is going to occur in the environment at a future point in time based on the contextual attributes, dynamically generating a distribution network based on based on execution of an AI model the contextual attributes, distributing a notification of the event to the generated distribution network, identifying at least one of a surrounding vehicle and a surrounding equipment to be included in the distribution network based on the contextual attributes, prior to the event occurring, determining a future travel path of a surrounding vehicle based on the contextual attributes and identifying at least one different vehicle that is impacted by the future travel path, wherein the generating includes generating the distribution network to include the at least one different vehicle determining a type of the event from among a plurality of possible event types based on execution of the AI model on the sensor data, and generating the distribution network based on the type of event, identifying static attributes of the environment comprising at least one road geometry of the environment and traffic rules of the environment, and executing the AI model on the static attributes, identifying dynamic attributes of the environment include at least one traffic conditions of the environment and objects within the environment, and executing the AI model on the dynamic attributes, generating an electronic message that comprises an identifier of the event, and transmitting the electronic message from the vehicle to the distribution network via vehicle-to-everything (V2X) communication, and determining updated data about the event from additional contextual attributes of the environment, generating an additional notification including the updated data about the event, and distributing the additional notification to the generated distribution network.

Data associated with any of these steps/features, as well as any other features or functionality described or depicted herein, the AI/ML production system 330, as well as one or more of the other elements depicted in FIG. 3C may be used to process this data in a pre-transformation and/or post-transformation process. Data related to this process can be used by the vehicle node 310. In one example of the instant solution, data related to this process may be used with a charging infrastructure, such as charging station, a server, a wireless device, and/or any of the processors described or depicted herein.

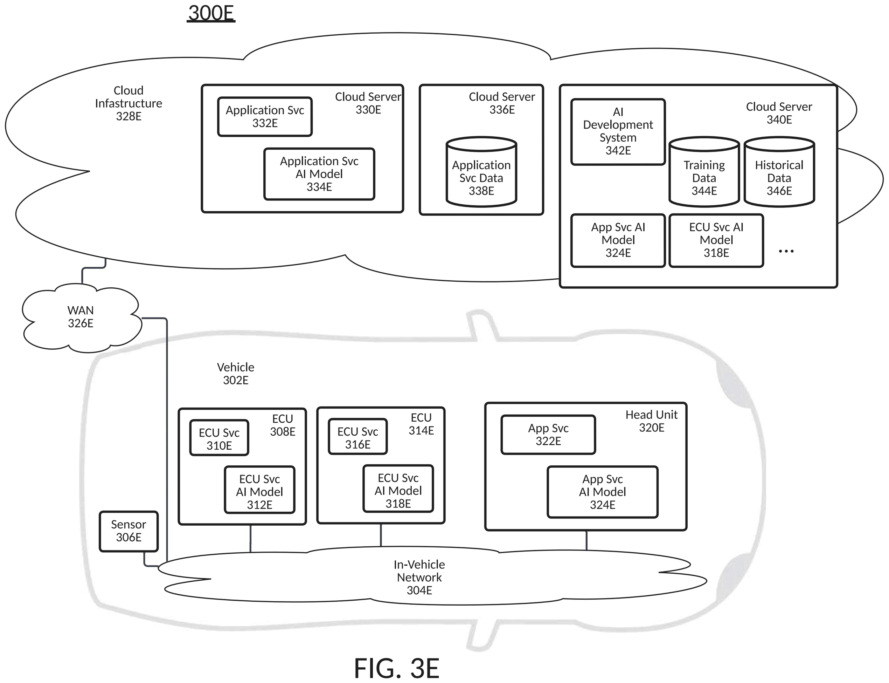

FIG. 3E illustrates a network diagram 300E that supports AI-assisted vehicle or occupant services utilizing traditional purpose-built Electronic Control Units (ECUs), a vehicle head unit, and cloud-hosted services. The AI models shown may be developed using methodologies such as, but not limited to, computer vision, fuzzy logic, expert systems, neural networks/deep learning, generative AI, and natural language processing, Computer vision enables machines to interpret visual data for tasks like object detection, facial recognition, and medical imaging analysis. Fuzzy logic is used for handling uncertainty in decision-making through graded truth values, commonly seen in smart thermostat controls or automotive transmission systems. Expert systems emulate human expertise in specific domains. Additionally, neural networks/deep learning architectures, including Convolutional Neural Networks (CNNs), Recurrent Neural Networks (RNNs), and transformers, are pivotal for pattern recognition in data-rich environments. Generative AI creates original content using models like Generative Adversarial Networks (GANs), Variational Autoencoders (VAEs), and diffusion models, while natural language processing (NLP) processes human language for applications like chatbots, sentiment analysis, and translation.

Further, the AI models may be developed using a strategic combination of three learning paradigms: supervised, unsupervised, and reinforcement learning. Supervised learning involves training on labeled data, commonly used in applications like spam filters and predictive maintenance. Unsupervised learning is used for pattern discovery in unlabeled data, such as customer segmentation. Reinforcement learning employs reward-based trial-and-error learning, often seen in game AI and robotic control. In practice, AI implementations often combine these methodologies and learning paradigms to create hybrid approaches. For instance, combining convolutional neural networks (computer vision) with reinforcement learning can be used in autonomous vehicles. Similarly, pairing NLP transformers with expert systems can enhance legal document analysis. Adaptive systems that self-optimize by switching between supervised and unsupervised methods based on data availability are also becoming more prevalent.

Referring now to FIG. 3E, Vehicle 302E, which is exemplary of vehicle node 310 (See FIGS. 3B-3D), may include an in-vehicle network 304E. In some configurations of the instant solution, the in-vehicle network may be, but is not limited to, a Control Area Network (CAN) bus, ethernet network, or a combination of the aforementioned types. Further, vehicle 302E, may contain a plurality of sensors 306E that may include but are not limited to, light sensors, weight sensors, cameras, LiDAR, and radar. In some configurations of the instant solution, these sensors 306E are controlled by one or more physical ECUs 308E, 314E. Each physical ECU 308E, 314E hosts an ECU service (Svc) 310E, 316E which provides the desired functionality. Note that for brevity, "Service" is abbreviated "Svc" in FIGS 3A-3B. In some configurations of the instant solution, an ECU service 310E, 316E is delivered as a software application, a collection of firmware of a combination of the aforementioned elements. Further, an ECU 308E, 314E may also host an ECU service AI model 312E, 318E that assists the corresponding ECU service 310E, 312E at various service decision points.

Vehicle 302E may also include a head unit 320E in some configurations of the instant solution. Head unit 320E, acting as an interface between the vehicle and the occupants, hosts a plurality of App services (Svc) 322E. In some configurations of the instant solution, the plurality of App services 322E include, but is not limited to, audio services, video services, and mobile device integration services. Typically, an App service 322E is delivered as a software application that is executed on the head unit 320E. In some configurations of the instant solution, an App service 322E is assisted, at various decision points, by an App service AI model 324E, hosted on the head unit 320E. In some configurations of the instant solution, an App service 322E is not dependent on interworking with cloud-hosted data or services. In some configurations of the instant solution, an App service 322E interworks with one or more ECU services 310E, 316E.

In other configurations of the instant solution, an App service 322E interworks with one or more cloud-hosted Application Services (Svc) 332E. Communication between the vehicle-hosted App service 322E and the cloud- hosted application service 332E is enabled through a Wide Area Network (WAN) 326E which is accessible via the in-vehicle network 304E. This WAN may be a public (e.g., the internet), private or a hybrid network. Cloud Server 330E is part of a Cloud Infrastructure 328E which might be provided by a public, commercial offering (e.g., AWS, Azure, etc.), a private set of computing resources, or a hybrid of the aforementioned options.

Application service 332E reads and/or writes application service (svc) data 338E stored on a cloud server 336E in some configurations of the instant solution. The application service data 338E may be stored in, but not limited to, a database, a filesystem, an object storage system, or a combination thereof. In some configurations of the instant solution, an App service 322E accesses some application service data 338E directly, instead of interworking with the corresponding application service 332E to access the application service data 338E.

An AI Development System 342E is hosted on a cloud server 340E which is part of the cloud infrastructure 328E in some configurations of the instant solution. The AI development system 342E is an exemplary of the AI development system 340 depicted in FIGS 3B-3D. The AI development system 342E utilizes model-specific training data 344E to produce the various ECU service AI models 312E, 318E, App service AI models 324E, and application service AI models 334E used in the network. These models may be stored in, and retrieved from, an AI model registry 360 (See FIGS. 3C-3D) which may be hosted on cloud server 340E or another cloud server (not shown) that is included in the cloud infrastructure 328E.

In some configurations of the instant solution, AI model feedback is provided by an ECU service 310E, 316E, an App service 322E, or an application service 334E and stored on cloud server 340E as historical data 346E. During the training phase, the AI development system 342E may utilize the historical data 346E to generate additional training data 344E.

In some configurations of the instant solution, ECU services 310E, 316E, check the AI model registry 360 (See FIGS. 3C-3D) periodically for updated models. In some configurations of the instant solution, ECU services 310E, 316E, are notified by the AI model registry 360 (See FIGS. 3C-3D) when updated models are available. In some configurations, ECU service AI model updates are manually initiated when a vehicle is serviced.

In some configurations of the instant solution, App services 322E, check the AI model registry 360 (See FIGS. 3C-3D) periodically for updated models. In some configurations of the instant solution, App services 322E, are notified by the AI model registry 360 (See FIGS. 3C-3D) when updated models are available. In some configurations, a vehicle owner or occupant manually initiates App service AI model updates.

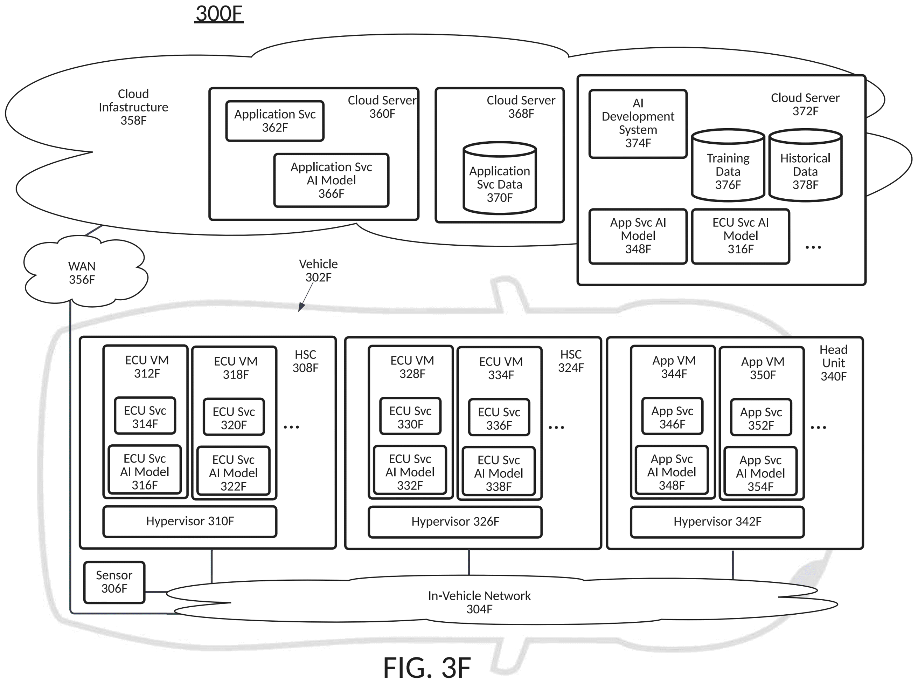

FIG. 3F illustrates a network diagram 300F that supports AI-assisted vehicle and occupant services in a Software as a Service (SaaS) environment hosted on generic High-Speed Compute (HSC) nodes. The AI models shown may be developed using methodologies such as, but not limited to, computer vision, fuzzy logic, expert systems, neural networks/deep learning, generative AI, and natural language processing, Computer vision enables machines to interpret visual data for tasks like object detection, facial recognition, and medical imaging analysis. Fuzzy logic is used for handling uncertainty in decision-making through graded truth values, commonly seen in smart thermostat controls or automotive transmission systems. Expert systems emulate human expertise in specific domains. Additionally, neural networks/deep learning architectures, including Convolutional Neural Networks (CNNs), Recurrent Neural Networks (RNNs), and transformers, are pivotal for pattern recognition in data-rich environments. Generative AI creates original content using models like Generative Adversarial Networks (GANs), Variational Autoencoders (VAEs), and diffusion models, while natural language processing (NLP) processes human language for applications like chatbots, sentiment analysis, and translation.

Further, the AI models may be developed using a strategic combination of three learning paradigms: supervised, unsupervised, and reinforcement learning. Supervised learning involves training on labeled data, commonly used in applications like spam filters and predictive maintenance. Unsupervised learning is used for pattern discovery in unlabeled data, such as customer segmentation. Reinforcement learning employs reward-based trial-and-error learning, often seen in game AI and robotic control. In practice, AI implementations often combine these methodologies and learning paradigms to create hybrid approaches. For instance, combining convolutional neural networks (computer vision) with reinforcement learning can be used in autonomous vehicles. Similarly, pairing NLP transformers with expert systems can enhance legal document analysis. Adaptive systems that self-optimize by switching between supervised and unsupervised methods based on data availability are also becoming more prevalent.

Referring now to FIG. 3F, Vehicle 302F, which is exemplary of vehicle node 310 (See FIGS. 3B-3D), includes a generic HSC architecture to deliver ECU and occupant App services in a SaaS architecture.

Vehicle 302F may include an in-vehicle network 304F. In some configurations of the instant solution, the in-vehicle network may be, but is not limited to, a Control Area Network (CAN) bus, an ethernet network, a vehicle-optimized high speed packet network, or a combination of the aforementioned types. Further, vehicle 302F may contain a plurality of 306F sensors that may include but are not limited to, light sensors, weight sensors, cameras, LiDAR, and radar. In some configurations of the instant solution, these sensors 306F are controlled by one or more ECU services (svc) 314F, 320F, 330F, 336F. Note that for brevity, "Service" is abbreviated "Svc" in FIGS 3A-3B. Each ECU service 314F, 320F, 330F, 336F executes in an ECU Virtual Machine (VM) 312F, 318F, 328F, 334F that are managed by a hypervisor 310F, 326F hosted on an HSC 308F, 324F. In some configurations of the instant solution, containers (not shown) are used to isolate the ECU services 314F, 320F, 330F, 336F instead of VMs plus a hypervisor. In some configurations of the instant solution, ECU services 314F, 320F, 330F, 336F are delivered as software applications that execute on the ECU VMs 312F, 318F, 328F, 334F. In some configurations of the instant solution, ECU services 314F, 320F, 330F, 336F are delivered as an entire ECU VM 312F, 318F, 328F, 334F image. Further, an ECU VM 312F, 318F, 328F, 334F may also host an ECU service AI model 316F, 322F, 332F, 338F that assists the corresponding ECU service 314F, 320F, 330F, 336F at various service decision points.

Vehicle 302F may also include a head unit 340F in some configurations of the instant solution. Head unit 340F, acting as an interface between the vehicle and the occupants, hosts a plurality of App services (Svc) 346F, 352F. In some configurations of the instant solution, the plurality of App services 346F, 352F include, but is not limited to, audio services, video services, and mobile device integration services. Each App service 346F, 352F executes in an App Virtual Machine (VM) 344F, 350F that are managed by a hypervisor 342F hosted on the head unit 340F.

In some configurations of the instant solution, containers (not shown) are used to isolate the App services 346F, 352F instead of VMs plus a hypervisor. In some configurations of the instant solution, the head unit 340F may be the same compute platform as the generic HSCs 308F, 342F hosting the ECU VMs. In other configurations of the instant solution, the head unit may be a more powerful generic compute platform than the HSCs 308F, 324F or a custom compute platform.

In some configurations of the instant solution, App services 346F, 352F are delivered as software applications that execute on the App VMs 344F, 350F. In some configurations of the instant solution, App services 346F, 352F are delivered as an entire App VM 344F, 350F image. Further, an App VM 344F, 350F may also host an App service AI model 348F, 354F that assists the corresponding App service 346F, 352F at various service decision points. In some configurations of the instant solution, an App service 346F, 352F is not dependent on interworking with cloud-hosted data or services. In some configurations of the instant solution, an App service 346F, 352F interworks with one or more ECU services 314F, 320F, 330F, 336F.

In other configurations of the instant solution, an App service 346F, 352F interworks with one or more cloud-hosted Application Services (Svc) 362F. Communication between the vehicle-hosted App service 346F, 352F and the cloud- hosted application service 362F is enabled through a Wide Area Network (WAN) 356E which is accessible via the in-vehicle network 304F. This WAN may be a public (e.g., the internet), private or a hybrid network. Cloud Server 330E is part of a Cloud Infrastructure 358E which might be provided by a public, commercial offering (e.g., AWS, Azure, etc.), a private set of computing resources, or a hybrid of the aforementioned options.

Application service 362F reads and/or writes application service (svc) data 370F stored on a cloud server 368F in some configurations of the instant solution. The application data 370F may be stored in, but not limited to, a database, a filesystem, an object storage system, or a combination thereof. In some configurations of the instant solution, an App service 346F, 352F accesses some application service data 370F directly, instead of interworking with the corresponding application service 362F to access the application service data 370F.

An AI Development System 374F is hosted on a cloud server 372F which is part of the cloud infrastructure 358F in some configurations of the instant solution. The AI development system 374F is an exemplary of the AI development system 340 depicted in FIGS 3B-3D. The AI development system 374F utilizes model-specific training data 376F to produce the various ECU service AI models 316F, 322F, 332F, 338F, App service AI models 348F, 354F, and application service AI models 366F used in the network. These models may be stored in, and retrieved from, an AI model registry 360 (See FIGS. 3C-3D) which may be hosted on cloud server 372F or another cloud server (not shown) that is included in the cloud infrastructure 358F.

In some configurations of the instant solution, AI model feedback is provided by an ECU service 314F, 320F, 330F, 336F, an App service 346F, 352F, or an application service 362F and stored on cloud server 372F as historical data 378F. During the training phase, the AI development system 374F may utilize the historical data 378F to generate additional training data 376F.

In some configurations of the instant solution, ECU services 314F, 320F, 330F, 336F, check the AI model registry 360 (See FIGS. 3C-3D) periodically for updated models. In some configurations of the instant solution, ECU services 314F, 320F, 330F, 336F are notified by the AI model registry 360 (See FIGS. 3C-3D) when updated models are available. In some configurations, ECU service AI model updates are manually initiated when a vehicle is serviced.

In some configurations of the instant solution, App services 346F, 352F, check the AI model registry 360 (See FIGS. 3C-3D) periodically for updated models. In some configurations of the instant solution, App services 346F, 352F, are notified by the AI model registry 360 (See FIGS. 3C-3D) when updated models are available. In some configurations, a vehicle owner or occupant manually initiates App service AI model updates.

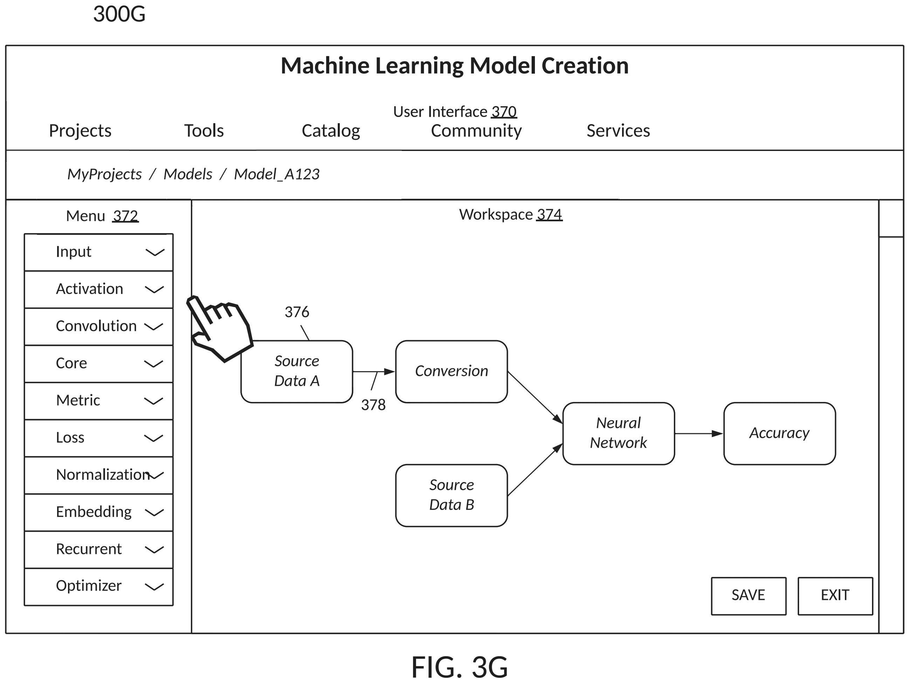

FIG. 3G illustrates a process 300G of designing a new machine learning model via a user interface 370 of the system according to examples of the instant solution. As an example, a model may be output as part of the AI/ML Development System 340. Referring to FIG. 3G, a user can use an input mechanism from menu 372 of a user interface 370 to add pieces/components to a model being developed within a workspace 374 of the user interface 370.

The menu 372 includes a plurality of graphical user interface (GUI) menu options which can be selected to reveal additional components that can be added to the model design shown in the workspace 374. The GUI menu includes options for adding elements to the workspace, such as features which may include neural networks, machine learning models, AI models, data sources, conversion processes (e.g., vectorization, encoding, etc.), analytics, etc. The user can continue to add features to the model and connect them using edges or other elements to create a flow within the workspace 374. For example, the user may add a node 376 to a flow of a new model within the workspace 374. For example, the user may connect the node 376 to another node in the diagram via an edge 378, creating a dependency within the diagram. When the user is done, the user can save the model for subsequent training/testing.

In another example, the name of the object can be identified from a web page or a user interface 370 where the object is visible within a browser or the workspace 374 on the user device. A pop-up within the browser or the workspace 374 can be overlayed where the object is visible. The pop-up includes an option to navigate to the identified web page corresponding to the alternative object via a rule set.

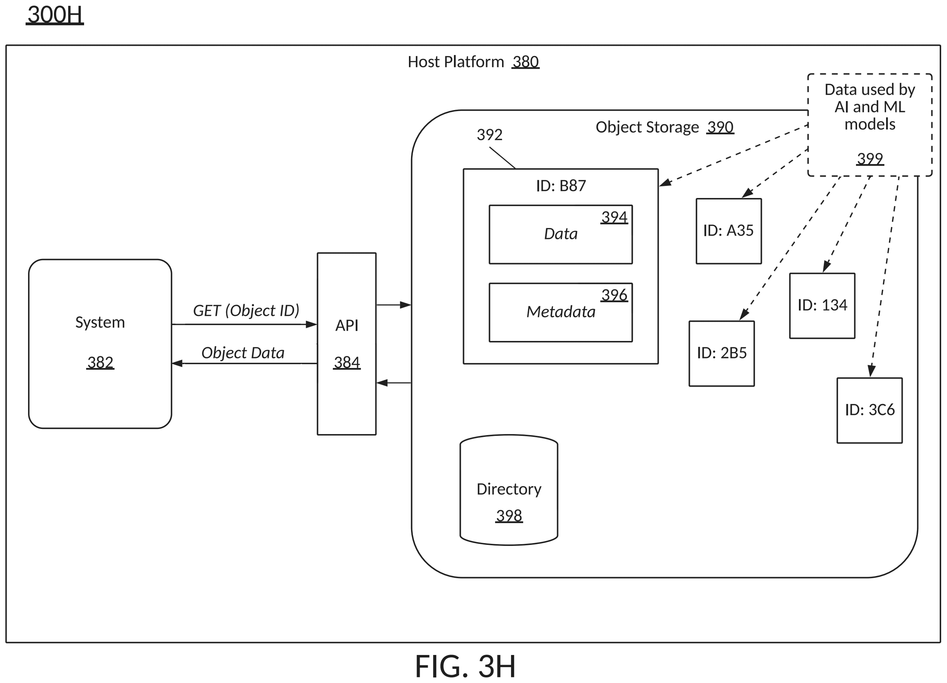

FIG. 3H illustrates a process 300H of accessing an object 392 from an object storage 390 of the host platform 380 according to examples of the instant solution. For example, the object storage 390 may store data that is used by the AI models and machine learning (ML) models 399, including but not limited to training data, expected outputs for testing, training results, and the like. The object storage 390 may also store any other kind of data. Each object may include a unique identifier, a data section 394, and a metadata section 396, which provide a descriptive context associated with the data, including data that can later be extracted for purposes of machine learning. The unique identifier may uniquely identify an object with respect to all other objects in the object storage 390. The data section 394 may include unstructured data such as web pages, digital content, images, audio, text, and the like.

Instead of breaking files into blocks stored on disks in a file system, the object storage 390 handles objects as discrete units of data stored in a structurally flat data environment. The object storage may not use folders, directories, or complex hierarchies. Instead, each object may be a simple, self-contained repository that includes the data, the metadata, and the unique identifier that a client application can use to locate and access it. In this case, the metadata is more descriptive than a file-based approach. The metadata can be customized with additional context that can later be extracted and leveraged for other purposes, such as data analytics.

The objects that are stored in the object storage 390 may be accessed via an API 384. The API 384 may be a Hypertext Transfer Protocol (HTTP)-based RESTful API (also known as a RESTful Web service). The API 384 can be used by the client application or system 382 to query an object's metadata to locate the desired object data via the Internet from anywhere on any device. The API 384 may use HTTP commands such as "PUT" or "POST" to upload an object, "GET" to retrieve an object, "DELETE" to remove an object, and the like.

The object storage 390 may provide a directory 398 that uses the metadata of the objects to locate appropriate data files. The directory 398 may contain descriptive information about each object stored in the object storage 390, such as a name, a unique identifier, a creation timestamp, a collection name, etc. To query the object within the object storage 390, the client application may submit a command, such as an HTTP command, with an identifier of the object 392, a payload, etc. The object storage 390 can store the actions and results described herein, including associating two or more lists of ranked assets with one another based on variables used by the two or more lists of ranked assets that have a correlation at or above a predetermined threshold.

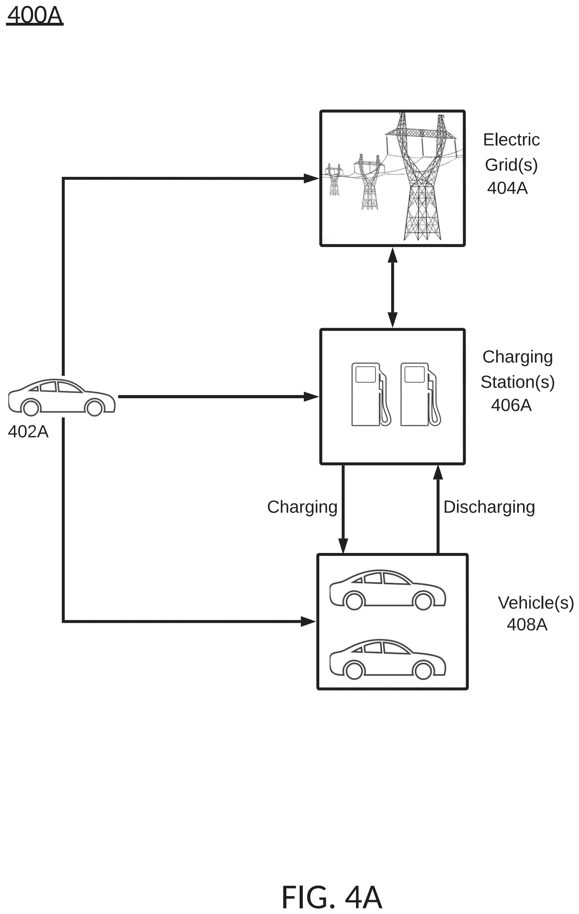

FIG. 4A illustrates a diagram 400A depicting the electrification of one or more elements. In one example, a vehicle 402A may provide energy stored in its batteries to one or more elements, including other vehicle(s) 408A, charging station(s) 406A, and electric grid(s) 404A. The electric grid(s) 404A is/are coupled to one or more of the charging station(s) 406A, which may be coupled to one or more of the vehicle(s) 408A. This configuration allows the distribution of electricity/power received from the vehicle 402A. The vehicle 402A may also interact with the other vehicle(s) 408A, such as via V2V technology, communication over cellular networks, Wi-Fi^{®}, and the like. The vehicle 402A may also interact via wired and/or wireless connections with other vehicles 408A, the charging station(s) 406A and/or with the electric grid(s) 404A. In one example, the vehicle 402A is routed (or routes itself) in a safe and efficient manner to the electric grid(s) 404A, the charging station(s) 406A, or the other vehicle(s) 408A. Using one or more examples of the instant solution, the vehicle 402A can provide energy to one or more of the elements depicted herein in various advantageous ways as described and/or depicted herein. Further, the safety and efficiency of the vehicle may be increased, and the environment may be positively affected as described and/or depicted herein. The hierarchy of a charging network may include a charging location which is a physical location where a vehicle may maneuver to connect and receive electricity. The charging location may include one or more charging stations. A charging bay may be proximate or associated with each charging station. A charging apparatus may be on the charging station, and a charging port on the vehicle may be configured to accept the charging apparatus to charge a battery on the vehicle. The connection between the charging apparatus and the vehicle may be a physical and/or a wireless connection.

The terms 'energy,' 'electricity,' 'power,' and the like may be used to denote any form of energy received, stored, used, shared, and/or lost by the vehicle(s). The energy may be referred to in conjunction with a voltage source and/or a current supply of charge provided from an entity to the vehicle(s) during a charge/use operation. Energy may also be in the form of fossil fuels (for example, for use with a hybrid vehicle) or via alternative power sources, including but not limited to lithium-based, nickel-based, hydrogen fuel cells, atomic/nuclear energy, fusion-based energy sources, and energy generated during an energy sharing and/or usage operation for increasing or decreasing one or more vehicles energy levels at a given time.

In one example, the charging station 406A manages the amount of energy transferred from the vehicle 402A such that there is sufficient charge remaining in the vehicle 402A to arrive at a destination. In another example, a wireless connection is used to wirelessly direct an amount of energy transfer between vehicles 408A, wherein the vehicles may both be in motion. In another example, wireless charging may occur via a fixed charger and batteries of the vehicle in alignment with one another (such as a charging mat in a garage or parking space). In another example, an idle vehicle, such as a vehicle 402A (which may be autonomous) is directed to provide an amount of energy to a charging station 406A and return to the original location (for example, its original location or a different destination). In another example, a mobile energy storage unit (not shown) is used to collect surplus energy from at least one other vehicle 408A and transfer the stored surplus energy at a charging station 406A. In another example, factors determine an amount of energy to transfer to a charging station 406A, such as distance, time, traffic conditions, road conditions, environmental/weather conditions, the vehicle's condition (weight, etc.), an occupant(s) schedule while utilizing the vehicle, a prospective occupant(s) schedule waiting for the vehicle, etc. In another example, the vehicle(s) 408A, the charging station(s) 406A and/or the electric grid(s) 404A can provide energy to the vehicle 402A.

In one example of the instant solution, a location such as a building, a residence, or the like (not depicted), is communicatively coupled to one or more of the electric grid(s) 404A, the vehicle 402A, and/or the charging station(s) 406A. The rate of electric flow to one or more of the location, the vehicle 402A and/or the other vehicle(s) 408A is modified, depending on external conditions, such as weather. For example, when the external temperature is extremely hot or extremely cold, raising the chance for an outage of electricity, the flow of electricity to a connected vehicle 402A/408A is slowed to help minimize the chance of an outage.

In one example of the instant solution, vehicles 402A and 408A may be utilized as bidirectional vehicles. Bidirectional vehicles are those that may serve as mobile microgrids that can assist in the supplying of electrical power to the grid 404A and/or reduce the power consumption when the grid is stressed. Bidirectional vehicles incorporate bidirectional charging, which in addition to receiving a charge to the vehicle, the vehicle can transfer energy from the vehicle to the grid 404A, otherwise referred to as "V2G". In bidirectional charging, the electricity flows both ways; to the vehicle and from the vehicle. When a vehicle is charged, alternating current (AC) electricity from the grid 404A is converted to direct current (DC). This may be performed by one or more of the vehicle's own converter(s) or a converter on the charging station 406A. The energy stored in the vehicle's batteries may be sent in an opposite direction back to the grid. The energy is converted from DC to AC through a converter usually located in the charging station 406A, otherwise referred to as a bidirectional charger. Further, the instant solution as described and depicted with respect to FIG. 4A can be utilized in this and other networks and/or systems.

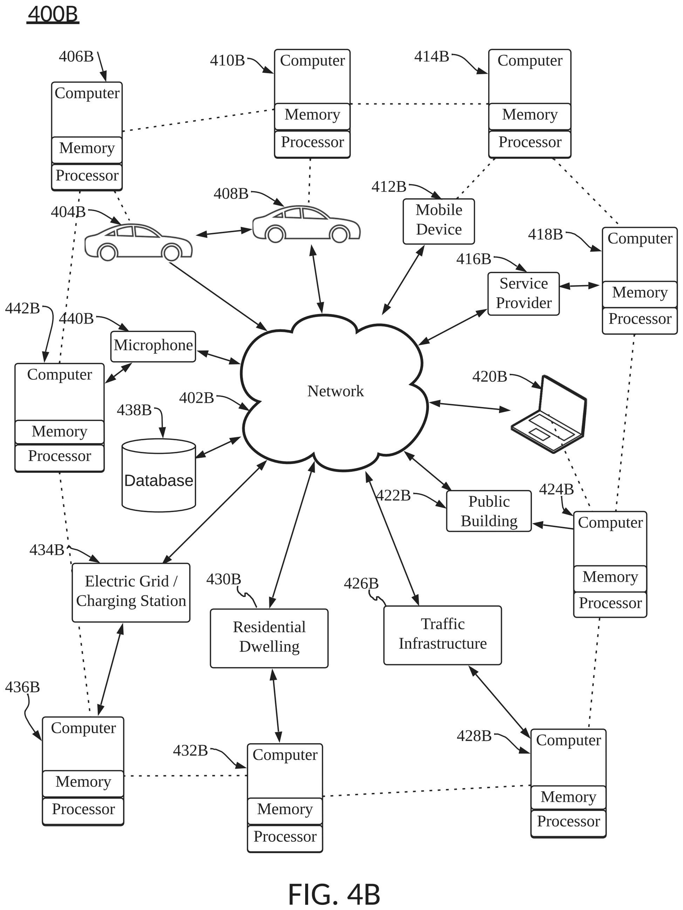

FIG. 4B is a diagram showing interconnections between different elements 400B. The instant solution may be stored and/or executed entirely or partially on and/or by one or more computing devices 414B, 418B, 424B, 428B, 432B, 436B, 406B, 442B and 410B associated with various entities, all communicatively coupled and in communication with a network 402B. A database 438B is communicatively coupled to the network and allows for the storage and retrieval of data. In one example, the database is an immutable ledger. One or more of the various entities may be a vehicle 404B, service provider 416B, public building 422B, traffic infrastructure 426B, residential dwelling 430B, an electric grid/charging station 434B, a microphone 440B, and/or another vehicle 408B. Other entities and/or devices, such as one or more private users using a mobile device 412B, a laptop 420B, an augmented reality (AR) device, a virtual reality (VR) device, and/or any wearable device may also interwork with the instant solution. The mobile device 412B, laptop 420B, microphone 440B, and other devices may be connected to one or more of the connected computing devices 414B, 418B, 424B, 428B, 432B, 436B, 406B, 442B, and 410B. The one or more public buildings 422B may include various agencies. The one or more public buildings 422B may utilize a computing device 424B. The one or more service provider(s) 416B may include a dealership, a tow truck service, a collision center, or other repair shop. The one or more service provider(s) 416B may utilize a computing apparatus 418B. These various computer devices may be directly and/or communicatively coupled to one another, such as via wired networks, wireless networks, blockchain networks, and the like. In one example, the microphone 440B may be utilized as a virtual assistant. In another example, the one or more traffic infrastructure 426B may include one or more traffic signals, one or more sensors including one or more cameras, vehicle speed sensors or traffic sensors, and/or other traffic infrastructure. The one or more traffic infrastructure 426B may utilize a computing device 428B.

In one example of the instant solution, anytime an electrical charge is given or received to/from a charging station and/or an electrical grid, the entities that allow that to occur are one or more of a vehicle, a charging station, a server, and a network communicatively coupled to the vehicle, the charging station, and the electrical grid.

In one example, a vehicle 408B /404B can transport a person, an object, a permanently or temporarily affixed apparatus, and the like. In another example, the vehicle 408B may communicate with vehicle 404B via V2V communication through the computers associated with each vehicle 406B and 410B and may be referred to as a car, vehicle, automobile, and the like. The vehicle 404B /408B may be a self-propelled wheeled conveyance, such as a car, a sports utility vehicle, a truck, a bus, a van, or other motor or battery-driven or fuel cell-driven vehicle. For example, vehicle 404B /408B may be an electric vehicle, a hybrid vehicle, a hydrogen fuel cell vehicle, a plug-in hybrid vehicle, or any other type of vehicle with a fuel cell stack, a motor, and/or a generator. Other examples of vehicles include bicycles, scooters, trains, planes, boats, and any other form of conveyance that is capable of transportation. The vehicle 404B /408B may be semi-autonomous or autonomous. For example, vehicle 404B /408B may be self-maneuvering and navigate without human input. An autonomous vehicle may have and use one or more sensors and/or a navigation unit to drive autonomously. All of the data described or depicted herein can be stored, analyzed, processed and/or forwarded by one or more of the elements in FIG. 4B.

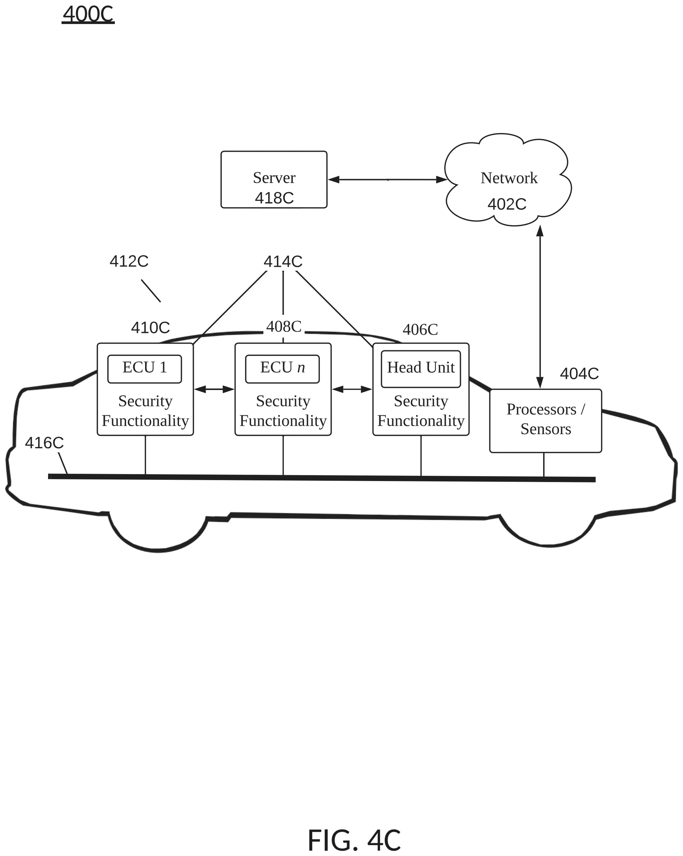

FIG. 4C is another block diagram showing interconnections between different elements in one example 400C. A vehicle 412C is presented and includes ECUs 410C, 408C, and a head unit (otherwise known as an infotainment system) 406C. An ECU is an embedded system in automotive electronics that controls one or more of the electrical systems or subsystems in a vehicle. ECUs may include but are not limited to the management of a vehicle's engine, brake system, gearbox system, door locks, dashboard, airbag system, infotainment system, electronic differential, and active suspension. ECUs are connected to the vehicle's Controller Area Network (CAN) bus 416C. The ECUs may also communicate with a vehicle computer 404C via the CAN bus 416C. The vehicle's processors/sensors (such as the vehicle computer) 404C can communicate with external elements, such as a server 418C via a network 402C (such as the Internet). Each ECU 410C, 408C, and head unit 406C may contain its own security policy. The security policy defines permissible processes that can be executed in the proper context. In one example, the security policy may be partially or entirely provided in the vehicle computer 404C.

ECUs 410C, 408C, and head unit 406C may each include a custom security functionality element 414C defining authorized processes and contexts within which those processes are permitted to run. Context-based authorization to determine validity if a process can be executed allows ECUs to maintain secure operation and prevent unauthorized access from elements such as the vehicle's CAN Bus. When an ECU encounters a process that is unauthorized, that ECU can block the process from operating. Automotive ECUs can use different contexts to determine whether a process is operating within its permitted bounds, such as proximity contexts, nearby objects, distance to approaching objects, speed, and trajectory relative to other moving objects, and operational contexts such as an indication of whether the vehicle is moving or parked, the vehicle's current speed, the transmission state, user-related contexts such as devices connected to the transport via wireless protocols, use of the infotainment, cruise control, parking assist, driving assist, location-based contexts, and/or other contexts.

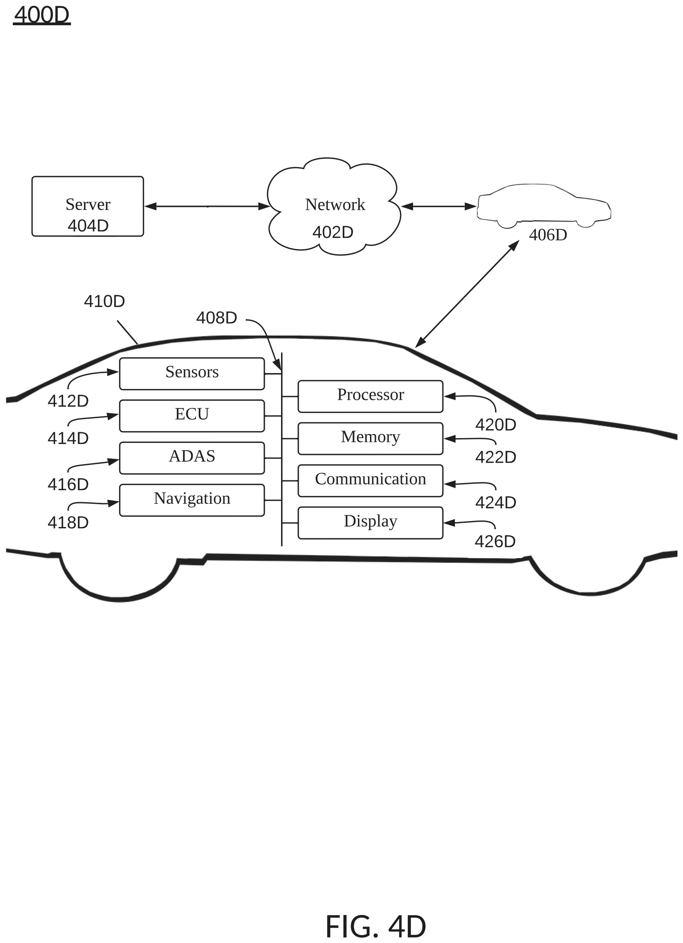

Referring to FIG. 4D, an operating environment 400D for a connected vehicle, is illustrated according to some examples of the instant solution. As depicted, the vehicle 410D includes a CAN bus 408D connecting elements 412D - 426D of the vehicle. Other elements may be connected to the CAN bus and are not depicted herein. The depicted elements connected to the CAN bus include a sensor set 412D, Electronic Control Units 414D, autonomous features or Advanced Driver Assistance Systems (ADAS) 416D, and the navigation system 418D. In some examples of the instant solution, the vehicle 410D includes a processor 420D, a memory 422D, a communication unit 424D, and an electronic display 426D.

The processor 420D includes an arithmetic logic unit, a microprocessor, a general-purpose controller, and/or a similar processor array to perform computations and provide electronic display signals to a display unit 426D. The processor 420D processes data signals and may include various computing architectures, including a complex instruction set computer (CISC) architecture, a reduced instruction set computer (RISC) architecture, or an architecture implementing a combination of instruction sets. The vehicle 410D may include one or more processors 420D. Other processors, operating systems, sensors, displays, and physical configurations that are communicatively coupled to one another (not depicted) may be used with the instant solution.

Memory 422D is a non-transitory memory storing instructions or data that may be accessed and executed by the processor 420D. The instructions and/or data may include code to perform the techniques described herein. The memory 422D may be a dynamic random-access memory (DRAM) device, a static random-access memory (SRAM) device, flash memory, or another memory device. In some examples of the instant solution, the memory 422D also may include non-volatile memory or a similar permanent storage device and media, which may include a hard disk drive, a floppy disk drive, a compact disc read only memory (CD-ROM) device, a digital versatile disk read only memory (DVD-ROM) device, a digital versatile disk random access memory (DVD-RAM) device, a digital versatile disk rewritable (DVD-RW) device, a flash memory device, or some other mass storage device for storing information on a permanent basis. A portion of the memory 422D may be reserved for use as a buffer or virtual random-access memory (virtual RAM). The vehicle 410D may include one or more memories 422D without deviating from the current solution.

The memory 422D of the vehicle 410D may store one or more of the following types of data: navigation route data 418D, and autonomous features data 416D. In some examples of the instant solution, the memory 422D stores data that may be necessary for the navigation application 418D to provide the functions.

The navigation system 418D may describe at least one navigation route including a start point and an endpoint. In some examples of the instant solution, the navigation system 418D of the vehicle 410D receives a request from a user for navigation routes wherein the request includes a starting point and an ending point. The navigation system 418D may query a real-time data server 404D (via a network 402D), such as a server that provides driving directions, for navigation route data corresponding to navigation routes, including the start point and the endpoint. The real-time data server 404D transmits the navigation route data to the vehicle 410D via a wireless network 402D, and the communication system 424D stores the navigation data 418D in the memory 422D of the vehicle 410D.

The ECU 414D controls the operation of many of the systems of the vehicle 410D, including the ADAS systems 416D. The ECU 414D may, responsive to instructions received from the navigation system 418D, deactivate any unsafe and/or unselected autonomous features for the duration of a journey controlled by the ADAS systems 416D. In this way, the navigation system 418D may control whether ADAS systems 416D are activated or enabled so that they may be activated for a given navigation route.

The sensor set 412D may include any sensors in the vehicle 410D generating sensor data. For example, the sensor set 412D may include short-range sensors and long-range sensors. In some examples of the instant solution, the sensor set 412D of the vehicle 410D may include one or more of the following vehicle sensors: a camera, a Light Detection and Ranging (LiDAR) sensor, an ultrasonic sensor, an automobile engine sensor, a radar sensor, a laser altimeter, a manifold absolute pressure sensor, an infrared detector, a motion detector, a thermostat, a sound detector, a carbon monoxide sensor, a carbon dioxide sensor, an oxygen sensor, a mass airflow sensor, an engine coolant temperature sensor, a throttle position sensor, a crankshaft position sensor, a valve timer, an air-fuel ratio meter, a blind spot meter, a curb feeler, a defect detector, a Hall effect sensor, a parking sensor, a radar gun, a speedometer, a speed sensor, a tire-pressure monitoring sensor, a torque sensor, a transmission fluid temperature sensor, a turbine speed sensor (TSS), a variable reluctance sensor, a vehicle speed sensor (VSS), a water sensor, a wheel speed sensor, a global positioning system (GPS) sensor, a mapping functionality, and any other type of automotive sensor. The navigation system 418D may store the sensor data in the memory 422D.

The communication unit 424D transmits and receives data to and from the network 402D or to another communication channel. In some examples of the instant solution, the communication unit 424D may include a dedicated short-range communication (DSRC) transceiver, a DSRC receiver, and other hardware or software necessary to make the vehicle 410D a DSRC-equipped device.

The vehicle 410D may interact with other vehicles 406D via V2V technology. V2V communication includes sensing radar information corresponding to relative distances to external objects, receiving GPS information of the vehicles, setting areas where the other vehicles 406D are located based on the sensed radar information, calculating probabilities that the GPS information of the object vehicles will be located at the set areas, and identifying vehicles and/or objects corresponding to the radar information and the GPS information of the object vehicles based on the calculated probabilities, in one example.

For a vehicle to be adequately secured, the vehicle must be protected from unauthorized physical access as well as unauthorized remote access (e.g., cyber-threats). To prevent unauthorized physical access, a vehicle is equipped with a secure access system such as a keyless entry in one example. Meanwhile, security protocols are added to a vehicle's computers and computer networks to facilitate secure remote communications to and from the vehicle in one example.

ECUs are nodes within a vehicle that control tasks ranging from activating the windshield wipers to controlling anti-lock brake systems. ECUs are often connected to one another through the vehicle's central network, which may be referred to as a controller area network (CAN). State-of-the-art features such as autonomous driving are strongly reliant on implementing new, complex ECUs such as ADAS, sensors, and the like. While these new technologies have helped improve the safety and driving experience of a vehicle, they have also increased the number of externally-communicating units inside of the vehicle, making them more vulnerable to attack. Below are some examples of protecting the vehicle from physical intrusion and remote intrusion.

In an example of the instant solution, a CAN includes a CAN bus with a high and low terminal and a plurality of ECUs, which are connected to the CAN bus via wired connections. The CAN bus is designed to allow microcontrollers and devices to communicate with each other in an application without a host computer. The CAN bus implements a message-based protocol (*i.e.*, ISO 11898 standards) that allows ECUs to send commands to one another at a root level. Meanwhile, the ECUs represent controllers for controlling electrical systems or subsystems within the vehicle. Examples of the electrical systems include power steering, anti-lock brakes, air-conditioning, tire pressure monitoring, cruise control, and many other features.

In one example, the ECU includes a transceiver and a microcontroller. The transceiver may be used to transmit and receive messages to and from the CAN bus. For example, the transceiver may convert the data from the microcontroller into a format of the CAN bus and also convert data from the CAN bus into a format for the microcontroller. Meanwhile, the microcontroller interprets the messages and also decides what messages to send using ECU software installed therein in one example.

To protect the CAN from cyber threats, various security protocols may be implemented. For example, sub-networks (e.g., sub-networks A and B, etc.) may be used to divide the CAN into smaller sub-CANs and limit an attacker's capabilities to access the vehicle remotely. In one example of the instant solution, a firewall (or gateway, etc.) may be added to block messages from crossing the CAN bus across sub-networks. If an attacker gains access to one sub-network, the attacker will not have access to the entire network. To make sub-networks even more secure, the most critical ECUs are not placed on the same sub-network, in one example.

In addition to protecting a vehicle's internal network, vehicles may also be protected when communicating with external networks such as the Internet. One of the benefits of having a vehicle connection to a data source such as the Internet is that information from the vehicle can be sent through a network to remote locations for analysis. Examples of vehicle information include GPS, onboard diagnostics, tire pressure, and the like. These communication systems are often referred to as telematics because they involve the combination of telecommunications and informatics. Further, the instant solution as described and depicted can be utilized in this and other networks and/or systems, including those that are described and depicted herein.

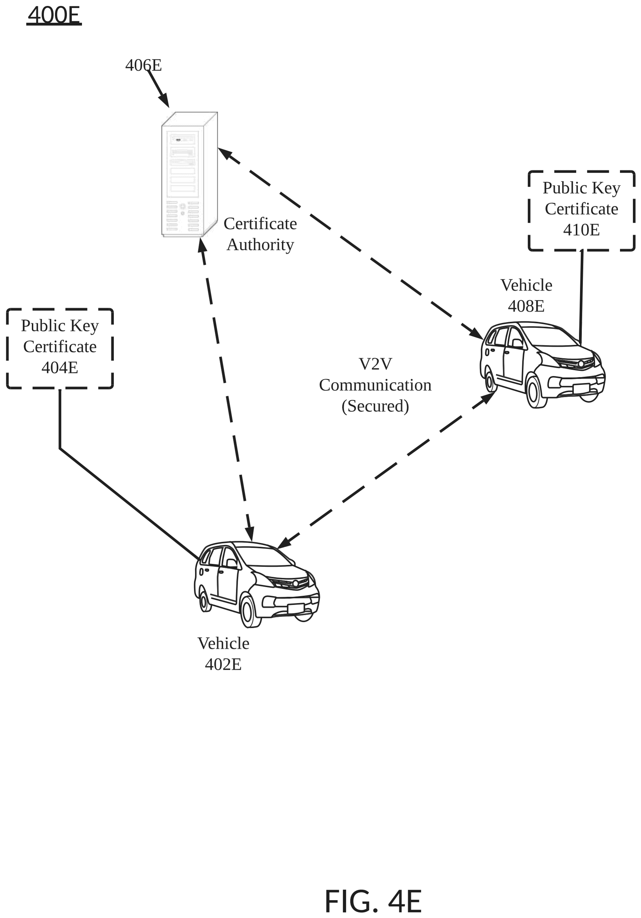

FIG. 4E illustrates an example 400E of vehicles 402E and 408E performing secured V2V communications using security certificates, according to examples of the instant solution. Referring to FIG. 4E, the vehicles 402E and 408E may communicate via V2V communications over a short-range network, a cellular network, or the like. Before sending messages, the vehicles 402E and 408E may sign the messages using a respective public key certificate. For example, the vehicle 402E may sign a V2V message using a public key certificate 404E. Likewise, the vehicle 408E may sign a V2V message using a public key certificate 410E. The public key certificates 404E and 410E are associated with the vehicles 402E and 408E, respectively, in one example.

Upon receiving the communications from each other, the vehicles may verify the signatures with a certificate authority 406E or the like. For example, the vehicle 408E may verify with the certificate authority 406E that the public key certificate 404E used by vehicle 402E to sign a V2V communication is authentic. If the vehicle 408E successfully verifies the public key certificate 404E, the vehicle knows that the data is from a legitimate source. Likewise, the vehicle 402E may verify with the certificate authority 406E that the public key certificate 410E used by the vehicle 408E to sign a V2V communication is authentic. Further, the instant solution as described and depicted with respect to FIG. 4E can be utilized in this and other networks and/or systems including those that are described and depicted herein.

In some examples of the instant solution, a computer may include a security processor. In particular, the security processor may perform authorization, authentication, cryptography (e.g., encryption), and the like, for data transmissions that are sent between ECUs and other devices on a CAN bus of a vehicle, and also data messages that are transmitted between different vehicles. The security processor may include an authorization module, an authentication module, and a cryptography module. The security processor may be implemented within the vehicle's computer and may communicate with other vehicle elements, for example, the ECUs/CAN network, wired and wireless devices such as wireless network interfaces, input ports, and the like. The security processor may ensure that data frames (e.g., CAN frames, etc.) that are transmitted internally within a vehicle (e.g., via the ECUs/CAN network) are secure. Likewise, the security processor can ensure that messages transmitted between different vehicles and devices attached or connected via a wire to the vehicle's computer are also secured.

For example, the authorization module may store passwords, usernames, PIN codes, biometric scans, and the like for different vehicle users. The authorization module may determine whether a user (or technician) has permission to access certain settings such as a vehicle's computer. In some examples of the instant solution, the authorization module may communicate with a network interface to download any necessary authorization information from an external server. When a user desires to make changes to the vehicle settings or modify technical details of the vehicle via a console or GUI within the vehicle or via an attached/connected device, the authorization module may require the user to verify themselves in some way before such settings are changed. For example, the authorization module may require a username, a password, a PIN code, a biometric scan, a predefined line drawing or gesture, and the like. In response, the authorization module may determine whether the user has the necessary permissions (access, etc.) being requested.

The authentication module may be used to authenticate internal communications between ECUs on the CAN network of the vehicle. As an example, the authentication module may provide information for authenticating communications between the ECUs. As an example, the authentication module may transmit a bit signature algorithm to the ECUs of the CAN network. The ECUs may use the bit signature algorithm to insert authentication bits into the CAN fields of the CAN frame. All ECUs on the CAN network typically receive each CAN frame. The bit signature algorithm may dynamically change the position, amount, etc., of authentication bits each time a new CAN frame is generated by one of the ECUs. The authentication module may also provide a list of ECUs that are exempt (safe list) and that do not need to use the authentication bits. The authentication module may communicate with a remote server to retrieve updates to the bit signature algorithm and the like.

The encryption module may store asymmetric key pairs to be used by the vehicle to communicate with other external user devices and vehicles. For example, the encryption module may provide a private key to be used by the vehicle to encrypt/decrypt communications, while the corresponding public key may be provided to other user devices and vehicles to enable the other devices to decrypt/encrypt the communications. The encryption module may communicate with a remote server to receive new keys, updates to keys, keys of new vehicles, users, etc., and the like. The encryption module may also transmit any updates to a local private/public key pair to the remote server.

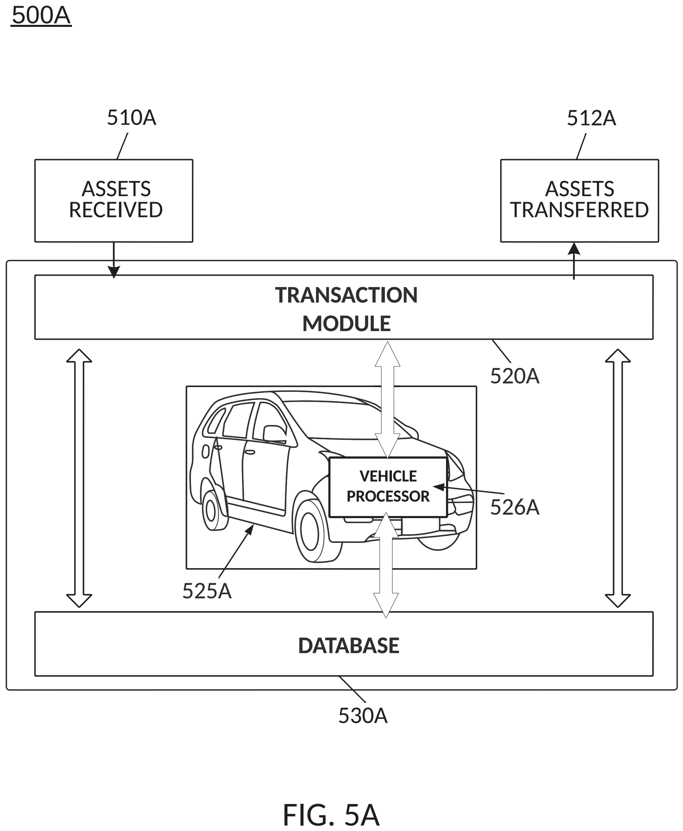

FIG. 5A illustrates an example vehicle configuration 500A for managing database transactions associated with a vehicle, according to examples of the instant solution. Referring to FIG. 5A, as a particular vehicle 525A is engaged in transactions (e.g., vehicle service, dealer transactions, delivery/pickup, transportation services, etc.), the vehicle may receive assets 510A and/or expel/transfer assets 512A according to a transaction(s). A vehicle processor 526A resides in the vehicle 525A and communication exists between the vehicle processor 526A, a database 530A, and the transaction module 520A. The transaction module 520A may record information, such as assets, parties, credits, service descriptions, date, time, location, results, notifications, unexpected events, etc. Those transactions in the transaction module 520A may be replicated into a database 530A. The database 530A can be one of a SQL database, a relational database management system (RDBMS), a relational database, a non-relational database, a blockchain, a distributed ledger, and may be on board the vehicle, may be off-board the vehicle, may be accessed directly and/or through a network, or be accessible to the vehicle.

In one example of the instant solution, a vehicle may engage with another vehicle to perform various actions such as to share, transfer, acquire service calls, etc. when the vehicle has reached a status where the services need to be shared with another vehicle. For example, the vehicle may be due for a battery charge and/or may have an issue with a tire and may be en route to pick up a package for delivery. A vehicle processor resides in the vehicle and communication exists between the vehicle processor, a first database, and a transaction module. The vehicle may notify another vehicle, which is in its network and which operates on its service, such as its blockchain member service. A vehicle processor resides in another vehicle and communication exists between the vehicle processor, a second database, and a transaction module. The another vehicle may then receive the information via a wireless communication request to perform the package pickup from the vehicle and/or from a server (not shown). The transactions are logged in the transaction modules and of both vehicles. The credits are transferred from the vehicle to the other vehicle and the record of the transferred service is logged in the first database. The first database can be one of a SQL database, an RDBMS, a relational database, a non-relational database, a blockchain, a distributed ledger, and may be on board the vehicle, may be off-board the vehicle, may be accessible directly and/or through a network. A maximum charge capacity of a battery of a vehicle is a measure of the battery's capacity relative to when it was new. As a battery ages chemically, its capacity decreases, which can result in fewer hours of usage between charges.

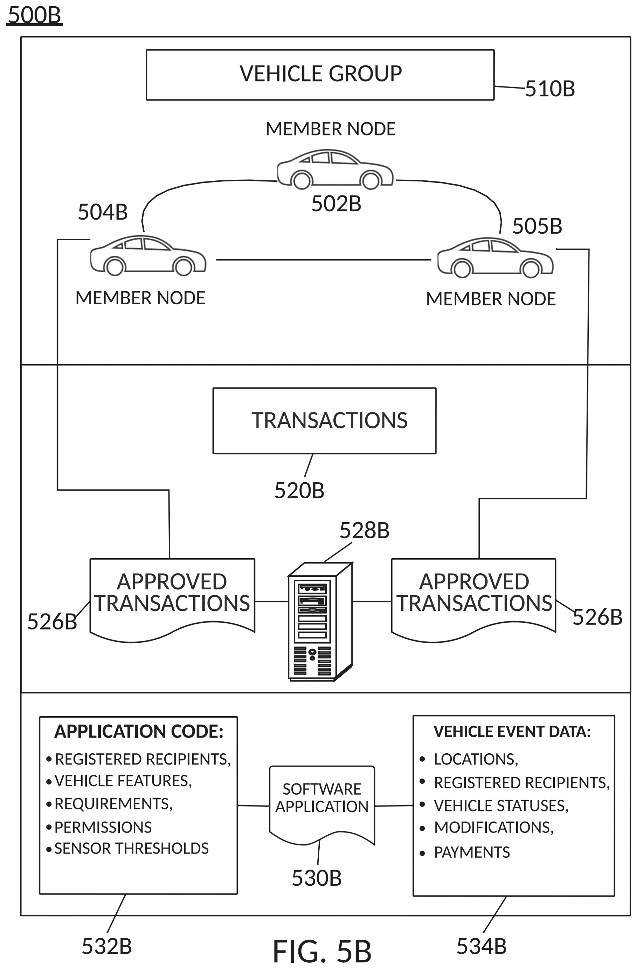

FIG. 5B illustrates an architecture configuration 500B, according to examples of the instant solution. Referring to FIG. 5B, the architecture 500B may include certain elements, for example, a group of vehicle member nodes 502B-505B as part of a group 510B. The member nodes participate in a number of activities, such as entry addition and validation process (consensus). One or more of the nodes may endorse entries based on an endorsement policy and may provide an ordering service for all nodes. A node may initiate an action (such as an authentication) and seek to write to the database.

The transactions 520B may be stored in memory of computers as the transactions are received and approved by the consensus model dictated by the members' nodes. Approved transactions 526B are stored in a database 528B. Within the system, one or more software applications 530B may exist that define the terms of transaction agreements and actions included in the application code 532B, such as registered recipients, vehicle features, requirements, permissions, sensor thresholds, etc. The code may be configured to identify whether requesting entities are registered to receive vehicle services, what service features they are entitled/required to receive given their profile statuses and whether to monitor their actions in subsequent events. For example, when a service event occurs and a user is riding in the vehicle, the sensor data monitoring may be triggered, and a certain parameter, such as a vehicle charge level, may be identified as being above/at/below a particular threshold for a particular period of time, then the result may be a change to a current status, which requires an alert to be sent to the managing party (*i.e.*, vehicle owner, vehicle operator, server, etc.) so the service can be identified and stored for reference. The vehicle sensor data collected may be based on types of sensor data used to collect information about vehicle's status. The sensor data may also be the basis for the vehicle event data 534B, such as a location(s) to be traveled, an average speed, a top speed, acceleration rates, whether there were any collisions, was the expected route taken, what is the next destination, whether safety measures are in place, whether the vehicle has enough charge/fuel, etc. All such information may be the basis of software application terms 530B, which are then stored in a database. For example, sensor thresholds stored in the software application can be used as the basis for whether a detected service is necessary and when and where the service should be performed.

The software application provides a basis for the transactions by establishing application code, which when executed causes the transaction terms and conditions to become active. The software application, when executed, causes certain approved transactions to be generated, which are then forwarded to the database. The platform includes a security/authorization, computing devices, which execute the transaction management and a storage portion as a memory that stores transactions and software applications in the database.

The architecture configuration of FIGS. 5A and 5B may process and execute program/application code via one or more interfaces exposed, and services provided, by the platform. As a non-limiting example, software applications may be created to execute reminders, updates, and/or other notifications subject to the changes, updates, etc. The software applications can themselves be used to identify rules associated with authorization and access requirements and usage of the ledger. For example, the information may include a new entry, which may be processed by one or more processing entities (e.g., processors, virtual machines, etc.) included in the database layer. The result may include a decision to reject or approve the new entry based on the criteria defined in the software application. The physical infrastructure may be utilized to retrieve any of the data or information described herein.

Within the executable code, a software application may be created via a high-level application and programming language, and then written to the database. The software application may include executable code that is registered, stored, and/or replicated with the database. An entry is an execution of the software application code, which can be performed in response to conditions associated with the software application being satisfied. The executing of the software application may trigger a trusted modification(s) to a state of the database. The modification(s) to the database caused by the software application execution may be automatically replicated throughout the database.

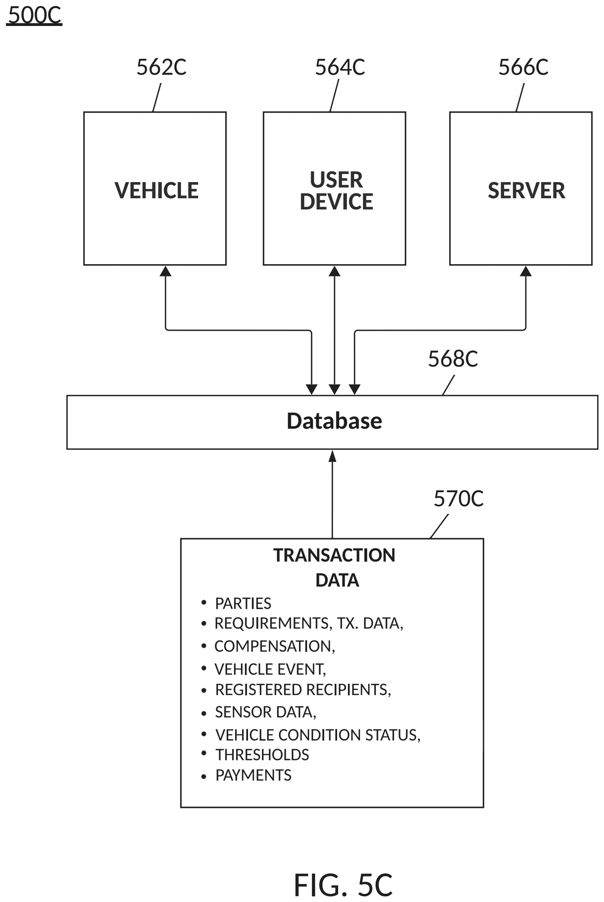

FIG. 5C illustrates a database configuration for storing transaction data, according to examples of the instant solution. Referring to FIG. 5C, the example configuration 500C provides for the vehicle 562C, the user device 564C and a server 566C sharing information with a database 568C, wherein the sharing may originate with the vehicle, user device, and server, or may originate with the database. The server may represent a service provider entity inquiring with a vehicle service provider to share user profile rating information in the event that a known and established user profile is attempting to rent a vehicle with an established rated profile. The server 566C may be receiving and processing data related to a vehicle's service requirements The transaction data 570C is saved for each transaction, such as the access event, the subsequent updates to a vehicle's service status, event updates, etc. The transactions may include at least one of the parties, the requirements (e.g., 18 years of age, service eligible candidate, valid driver's license, etc.), compensation levels, the distance traveled during the event, the registered recipients permitted to access the event and host a vehicle service, rights/permissions, sensor data retrieved during the vehicle event operation to log details of the next service event and identify a vehicle's condition status, thresholds used to make determinations about whether the service event was completed and whether the vehicle's condition status has changed, and payment information.

The above examples of the instant solution may be implemented in hardware, in a computer program executed by a processor, in firmware, or in a combination of the above. A computer program may be embodied on a computer-readable storage medium, such as a storage medium. For example, a computer program may reside in random access memory ("RAM"), flash memory, read-only memory ("ROM"), erasable programmable read-only memory ("EPROM"), electrically erasable programmable read-only memory ("EEPROM"), registers, hard disk, a removable disk, a compact disk read-only memory ("CD-ROM"), or any other form of storage medium known in the art.

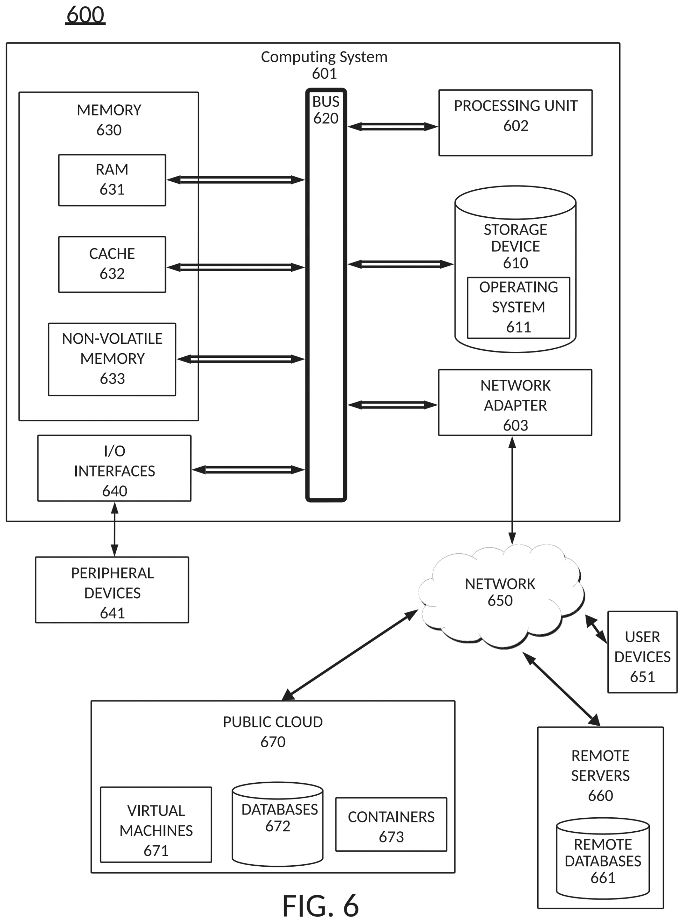

An exemplary storage medium may be coupled to the processor such that the processor may read information from, and write information to, the storage medium. In the alternative, the storage medium may be integral to the processor. The processor and the storage medium may reside in an application-specific integrated circuit ("ASIC"). In the alternative, the processor and the storage medium may reside as discrete components. For example, FIG. 6 illustrates an example computing system architecture 600, which may represent or be integrated in any of the above-described components, etc.

FIG. 6 illustrates a computing environment according to examples of the instant solution. FIG. 6 is not intended to suggest any limitation as to the scope of use or functionality of examples of the instant solution of the application described herein. Regardless, the computing environment 600 can be implemented to perform any of the functionalities described herein. In computer environment 600, computing system 601 is operational within numerous other general-purpose or special-purpose computing system environments or configurations.

Computing system 601 may take the form of a desktop computer, laptop computer, tablet computer, smartphone, smartwatch or other wearable computer, server computing system, thin client, thick client, network PC, minicomputing system, mainframe computer, quantum computer, and distributed cloud computing environment that includes any of the described systems or devices, and the like or any other form of computer or mobile device now known or to be developed in the future that is capable of running a program, accessing a network 650 or querying a database. Depending upon the technology, the performance of a computer-implemented method may be distributed among multiple computers and between multiple locations. However, in this presentation of the computing environment 600, a detailed discussion is focused on a single computer, specifically computing system 601, to keep the presentation as simple as possible.

Computing system 601 may be located in a cloud, even though it is not shown in a cloud in FIG. 6. On the other hand, computing system 601 is not required to be in a cloud except to any extent as may be affirmatively indicated. Computing system 601 may be described in the general context of computing system-executable instructions, such as program modules, executed by a computing system 601. Generally, program modules may include routines, programs, objects, components, logic, data structures, and so on that perform tasks or implement certain abstract data types. As shown in FIG. 6, computing system 601 in computing environment 600 is shown in the form of a general-purpose computing device. The components of computing system 601 may include, but are not limited to, one or more processors or processing units 602, a system memory 630, and a bus 620 that couples various system components, including system memory 630 to processing unit 602.

Processing unit 602 includes one or more computer processors of any type now known or to be developed. The processing unit 602 may contain circuitry distributed over multiple integrated circuit chips. The processing unit 602 may also implement multiple processor threads and multiple processor cores. Cache 632 is a memory that may be in the processor chip package(s) or located "off-chip," as depicted in FIG. 6. Cache 632 is typically used for data or code that the threads or cores running on the processing unit 602 should be available for rapid access. In some computing environments, processing unit 602 may be designed to work with qubits and perform quantum computing.

Network adapter 603 enables the computing system 601 to connect and communicate with one or more networks 650, such as a local area network (LAN), a wide area network (WAN), and/or a public network (e.g., the Internet). It bridges the computer's internal bus 620 and the external network, exchanging data efficiently and reliably. The network adapter 603 may include hardware, such as modems or Wi-Fi^{®} signal transceivers, and software for packetizing and/or de-packetizing data for communication network transmission. Network adapter 603 supports various communication protocols to ensure compatibility with network standards. For Ethernet connections, it adheres to protocols such as IEEE 802.3, while for wireless communications, it might support IEEE 802.11 standards, Bluetooth^{®}, near-field communication (NFC), or other network wireless radio standards.

Computing system 601 may include a removable/non-removable, volatile/non-volatile computer storage device 610. By way of example only, storage device 610 can be a non-removable, non-volatile magnetic media (not shown and typically called a "hard drive"). One or more data interfaces can connect it to the bus 620. In examples of the instant solution where computing system 601 is required to have a large amount of storage (for example, where computing system 601 locally stores and manages a large database), then this storage may be provided by storage devices 610 designed for storing very large amounts of data, such as a storage area network (SAN) that is shared by multiple, geographically distributed computers.

The operating system 611 is software that manages computing system 601 hardware resources and provides common services for computer programs. Operating system 611 may take several forms, such as various known proprietary operating systems or open-source Portable Operating System Interface type operating systems that employ a kernel.

The bus 620 represents one or more of several types of bus structures, including a memory bus or memory controller, a peripheral bus, an accelerated graphics port, and a processor or local bus using various bus architectures. By way of example, and not limitation, such architectures include Industry Standard Architecture (ISA) buses, Micro Channel Architecture (MCA) buses, Enhanced ISA (EISA) buses, Video Electronics Standards Association (VESA) local buses, and Peripheral Component Interconnect (PCI) bus. The bus 620 is the signal conduction path that allows the various components of computing system 601 to communicate with each other.

Memory 630 is any volatile memory now known or to be developed in the future. Examples include dynamic random-access memory (RAM 631) or static type RAM 631. Typically, the volatile memory is characterized by random access, but this is not required unless affirmatively indicated. In computing system 601, memory 630 is in a single package and is internal to computing system 601, but alternatively or additionally, the volatile memory may be distributed over multiple packages and/or located externally with respect to computing system 601. By way of example only, memory 630 can be provided for reading from and writing to a non-removable, non-volatile magnetic media (shown as storage device 610, and typically called a "hard drive"). Memory 630 may include at least one d product having a set (e.g., at least one) of program modules configured to carry out various functions. A typical computing system 601 may include cache 632, a specialized volatile memory generally faster than RAM 631 and generally located closer to the processing unit 602. Cache 632 stores frequently accessed data and instructions accessed by the processing unit 602 to speed up processing time. The computing system 601 may include non-volatile memory 633 in ROM, PROM, EEPROM, and flash memory. Non-volatile memory 633 often contains programming instructions for starting the computer, including the basic input/output system (BIOS) and information required to start the operating system 611.

Computing system 601 may also communicate with one or more peripheral devices 641 via an input/output (I/O) interface 640. Such devices may include a keyboard, a pointing device, a display, etc.; one or more devices that enable a user to interact with computing system 601; and/or any devices (*e.g.,* network card, modem, etc.) that enable computing system 601 to communicate with one or more other computing devices. Such communication can occur via I/O interfaces 640. As depicted, I/O interface 640 communicates with the other components of computing system 601 via bus 620.

Network 650 is any computer network that can receive and/or transmit data. Network 650 can include a WAN, LAN, private cloud, or public Internet, capable of communicating computer data over non-local distances by any technology that is now known or to be developed in the future. Any connection depicted can be wired and/or wireless and may traverse other components that are not shown. In some examples of the instant solution, a network 650 may be replaced and/or supplemented by LANs designed to communicate data between devices located in a local area, such as a Wi-Fi^{®} network. The network 650 typically includes computer hardware such as copper transmission cables, optical transmission fibers, wireless transmission, routers, firewalls, switches, gateway computers, edge servers, and network infrastructure known now or to be developed in the future. Computing system 601 connects to network 650 via network adapter 603 and bus 620.

User devices 651 are any computing systems used and controlled by an end user in connection with computing system 601. For example, in a hypothetical case where computing system 601 is designed to provide a recommendation to an end user, this recommendation may typically be communicated from network adapter 603 of computing system 601 through network 650 to a user device 651, allowing user device 651 to display, or otherwise present, the recommendation to an end user. User devices can be a wide array of devices, including personal computers (PCs), laptops, tablets, hand-held, mobile phones, etc.

Remote servers 660 are any computers that serve at least some data and/or functionality over a network 650, for example, WAN, a virtual private network (VPN), a private cloud, or via the Internet to computing system 601. These networks 650 may communicate with a LAN to reach users. The user interface may include a web browser or an application that facilitates communication between the user and remote data. Such applications have been called "thin" desktops or "thin clients." Thin clients typically incorporate software programs to emulate desktop sessions. Mobile applications can also be used. Remote servers 660 can also host remote databases 661, with the database located on one remote server 660 or distributed across multiple remote servers 660. Remote databases 661 are accessible from database client applications installed locally on the remote server 660, other remote servers 660, user devices 651, or computing system 601 across a network 650.

A public cloud 670 is an on-demand availability of computing system resources, including data storage and computing power, without direct active management by the user. Public clouds 670 are often distributed, with data centers in multiple locations for availability and performance. Computing resources on public clouds 670 are shared across multiple tenants through virtual computing environments comprising virtual machines 671, databases 672, containers 673, and other resources. A container 673 is an isolated, lightweight software for running an application on the host operating system 611. Containers 673 are built on top of the host operating system's kernel and contain only applications and some lightweight operating system APIs and services. In contrast, virtual machine 671 is a software layer that includes a complete operating system 611 and kernel. Virtual machines 671 are built on top of a hypervisor emulation layer designed to abstract a host computer's hardware from the operating software environment. Public clouds 670 generally offer hosted databases 672 abstracting high-level database management activities. It should be further understood that one or more of the elements described or depicted in FIG. 6 can perform one or more of the actions, functionalities, or features described or depicted herein. Computing environment 600, which may be located in or associated with a vehicle, enhances the functionality and interoperability of components, including computing systems within vehicles. The architecture incorporates a processor and a storage medium, which can be integrated with the processor or configured as separate components. This flexible setup allows for customization based on specific vehicular computing needs, whether embedded within an application-specific integrated circuit (ASIC) for dedicated tasks or as discrete units for modular scalability. The computing system, depicted in FIG. 6, demonstrates adaptability to various vehicular settings, from passenger cars and commercial trucks to autonomous and connected vehicles, supporting a range of functionalities.

Computing system 601 includes a processing unit 602 connected to a system memory 630 via a bus 620. This configuration facilitates the rapid processing and communication necessary for real-time vehicular operations, such as navigation, telematics, and autonomous driving functionalities. A network adapter 603 ensures the system's connectivity to at least vehicular networks and the Internet of Vehicles (IoV), as well as supporting protocols and standards essential for vehicular communication, safety, and entertainment systems.

Storage solutions within the computing system 601 support the robust data requirements of vehicles, from storing extensive maps and software updates to logging vehicle diagnostics and telematics information. The system's operating system 611 is designed to manage these resources efficiently.

The bus architecture 620 is tailored to vehicular needs, supporting high-speed data transfer and reliable communication between the computing system's components, essential for the timely execution of vehicular functions. Memory 630, including both volatile and non-volatile options, is optimized for the operational demands of vehicles, providing the necessary speed and capacity for tasks ranging from immediate processing needs to long-term data storage.

Peripheral interfaces 641 and I/O interfaces 640 are integrated to facilitate interaction with other vehicular systems and components, such as sensors, actuators, and user interfaces, highlighting the system's capacity for vehicular integration. Moreover, the system's design accounts for connectivity with external networks 650, including at least dedicated vehicular communication networks.

One or more of the components described or depicted herein, including at least vehicle 202, computer 224, vehicle node 310, AI/ML systems 330/340/360/332, computers/servers 410C/414C/418C/424C/428C/432C/436C/442C/406C, server 418D, server 404E, Certificate Authority 306I, Member Nodes 502B-505B, server 566C, and servers 510E-513E, may be one or more of the components including at least 601, 641, 650, 651, 660, 670, and 671.

Although an example of at least one of a system, method, and non-transitory computer-readable storage medium has been illustrated in the accompanied drawings and described in the foregoing detailed description, it will be understood that the application is not limited to the examples of the instant solution disclosed, but is capable of numerous rearrangements, modifications, and substitutions as set forth and defined by the following claims. For example, the system's capabilities of the various figures can be performed by one or more of the modules or components described herein or in a distributed architecture and may include a transmitter, receiver, or pair of both. For example, all or part of the functionality performed by the individual modules, may be performed by one or more of these modules. Further, the functionality described herein may be performed at various times and in relation to various events, internal or external to the modules or components. Also, the information sent between various modules can be sent between the modules via at least one of a data network, the Internet, a voice network, an Internet Protocol network, a wireless device, a wired device, and/or via a plurality of protocols. Also, the messages sent or received by any of the modules may be sent or received directly and/or via one or more of the other modules.

One skilled in the art will appreciate that a "system" may be embodied as a personal computer, a server, a console, a personal digital assistant (PDA), a cell phone, a tablet computing device, a smartphone or any other suitable computing device, or combination of devices. Presenting the above-described functions as being performed by a "system" is not intended to limit the scope of the present application in any way but is intended to provide one example of many examples of the instant solution. Indeed, methods, systems, apparatuses, programs, computer programs, program products, disclosed herein may be implemented in localized and distributed forms consistent with computing technology.

It should be noted that some of the system features described in this specification have been presented as modules to emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field-programmable gate arrays, programmable array logic, programmable logic devices, graphics processing units, or the like.

A module may also be at least partially implemented in software for execution by various types of processors. An identified unit of executable code may, for instance, comprise one or more physical or logical blocks of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Further, modules may be stored on a computer-readable storage medium, which may be, for instance, a hard disk drive, flash device, random access memory (RAM), tape, or any other such medium used to store data.

Indeed, a module of executable code may be a single instruction or many instructions and may even be distributed over several different code segments, among different programs, and across several memory devices. Similarly, operational data may be identified and illustrated within modules and embodied in any suitable form and organized within any suitable type of data structure. The operational data may be collected as a single data set or may be distributed over different locations, including over different storage devices, and may exist, at least partially, merely as electronic signals on a system or network.

It will be readily understood that the components of the application, as generally described and illustrated in the figures herein, may be arranged and designed in a wide variety of different configurations. Thus, the detailed description of the examples of the instant solution is not intended to limit the scope of the application as claimed but is merely representative of selected examples of the instant solution of the application.

One having ordinary skill in the art will readily understand that the above may be practiced with steps in a different order and/or with hardware elements in configurations that are different from those which are disclosed. Therefore, although the application has been described based upon these preferred examples of the instant solution, it would be apparent to those of skill in the art that certain modifications, variations, and alternative constructions would be apparent.

While preferred examples of the instant solution of the present application have been described, it is to be understood that the examples of the instant solution described are illustrative only and the scope of the application is to be defined solely by the appended claims when considered with a full range of equivalents and modifications (e.g., protocols, hardware devices, software platforms etc.) thereto.

## Claims

1. A method comprising:
capturing (244C) sensor data with at least one sensor (114) of a vehicle (110);
identifying (246C) contextual attributes of an environment of the vehicle (110) based on the sensor data and properties of the environment;
determining (248C) an event that is going to occur in the environment at a future point in time based on the contextual attributes;
dynamically generating (250C) a distribution network (130) based on based on execution of an artificial intelligence (AI) model (122) the contextual attributes; and
distributing (252C) a notification of the event to the generated distribution network (130).

2. The method of claim 1, wherein the generating the distribution network (130) comprises identifying at least one of a surrounding vehicle (133) and a surrounding equipment to be included in the distribution network (130) based on the contextual attributes, prior to the event occurring.

3. The method of any of claims 1 to 2, wherein the determining the event comprises determining a future travel path (135) of a surrounding vehicle (133) based on the contextual attributes and identifying at least one different vehicle (132, 134) that is impacted by the future travel path (135), wherein the generating the distribution network (130) comprises generating the distribution network (130) to include the at least one different vehicle (132, 134).

4. The method of any of claims 1 to 3, wherein the determining the event that is occurring comprises determining a type of the event from among a plurality of possible event types based on execution of the AI model (122) on the sensor data, and the generating the distribution network (130) comprises generating the distribution network (130) based on the type of event.

5. The method of any of claims 1 to 4, wherein the identifying the contextual attributes comprises identifying static attributes (150) of the environment comprising at least one road geometry of the environment and traffic rules of the environment, and the generating the distribution network (130) comprises executing the AI model (122) on the static attributes (150).

6. The method of any of claims 1 to 5, wherein the identifying the contextual attributes comprises identifying dynamic attributes (151) of the environment comprising at least one traffic conditions of the environment and objects within the environment, and the generating the distribution network (130) comprises executing the AI model (122) on the dynamic attributes (151).

7. The method of any of claims 1 to 6, wherein the distributing comprises generating an electronic message that comprises an identifier of the event, and transmitting the electronic message from the vehicle (110) to the distribution network (130) via vehicle-to-everything (V2X) communication.

8. An apparatus comprising:
a memory; and
at least one processor (204, 204'), wherein the memory and the at least one processor (204, 204') are communicatively coupled, wherein the at least one processor (204, 204') is configured to:
capture (244C) sensor data with at least one sensor (114) of a vehicle (110),
identify (246C) contextual attributes of an environment of the vehicle (110) based on the sensor data and properties of the environment,
determine (248C) an event that is going to occur in the environment at a future point in time based on the contextual attributes,
dynamically generate (250C) a distribution network (130) based on based on execution of an artificial intelligence (AI) model (122) the contextual attributes, and
distribute (252C) a notification of the event to the generated distribution network (130).

9. The apparatus of claim 8, wherein the at least one processor (204, 204') is configured to identify (244D) at least one of a surrounding vehicle (133) and a surrounding equipment to be included in the distribution network (130) based on the contextual attributes, prior to the event occurring.

10. The apparatus of any of claims 8 to 9, wherein the at least one processor (204, 204') is configured to determine (245D) a future travel path (135) of a surrounding vehicle (133) based on the contextual attributes, identify at least one different vehicle (132, 134) that is impacted by the future travel path (135), and generate the distribution network (130) to include the at least one different vehicle (132, 134).

11. The apparatus of any of claims 8 to 10, wherein the at least one processor (204, 204') is configured to determine (246D) a type of the event from among a plurality of possible event types based on execution of the AI model (122) on the sensor data, and generate the distribution network (130) based on the type of event.

12. The apparatus of any of claims 8 to 11, wherein the at least one processor (204, 204') is configured to identify (247D) static attributes (150) of the environment comprising at least one road geometry of the environment and traffic rules of the environment, and execute the AI model (122) on the static attributes (150).

13. The apparatus of any of claims 8 to 12, wherein the at least one processor (204, 204') is configured to identify (248D) dynamic attributes (151) of the environment comprising at least one traffic conditions of the environment and objects within the environment, and execute the AI model (122) on the dynamic attributes (151).

14. The apparatus of any of claims 8 to 13, wherein the at least one processor (204, 204') is configured to generate (249D) an electronic message that comprises an identifier of the event, and transmit the electronic message from the vehicle (110) to the distribution network (130) via vehicle-to-everything (V2X) communication.

15. A computer-readable storage medium comprising instructions, that when read by a processor (204, 204'), cause the processor (204, 204') to perform:
capturing (244C) sensor data with at least one sensor (114) of a vehicle (110);
identifying (246C) contextual attributes of an environment of the vehicle (110) based on the sensor data and properties of the environment;
determining (248C) an event that is going to occur in the environment at a future point in time based on the contextual attributes;
dynamically generating (250C) a distribution network based on based on execution of an artificial intelligence (AI) model (122) the contextual attributes; and
distributing (252C) a notification of the event to the generated distribution network.
